# EUROPEAN PATENT APPLICATION

(11) **EP 4 827 006 A1**
(43) Date of publication of application: **21.10.2026**
(21) Application number: 24835041.5
(22) Date of filing: 23.01.2024
(51) Int. Cl.: H04B 7/0456

(54) **PROCESSING METHOD, COMMUNICATION DEVICE, AND STORAGE MEDIUM**

(71) Applicant: Shenzhen Transsion Holdings Co., Ltd., Shenzhen, Guangdong 518057 (CN)
(72) Inventor: LI, Tian, Shenzhen, Guangdong 518057 (CN); XIE, Yili, Shenzhen, Guangdong 518057 (CN); HUANG, Wei, Shenzhen, Guangdong 518057 (CN)
(74) Representative: Barker Brettell LLP
(86) International application number: PCT/CN2024/073712
(87) International publication number: WO 2025/007553

(57) **Abstract**

In technical solutions of the present application, a terminal device performs uplink transmission based on at least three antenna ports according to downlink information, to support the uplink transmission based on at least three antenna ports, thereby increasing the uplink throughput, improving the uplink coverage and/or reducing the terminal device costs.

## Description

### TECHNICAL FIELD

The present application relates to the technical field of communications, and in particular, to a processing method, a communication device and a storage medium.

### BACKGROUND

In existing specifications, terminal devices do not support three antenna ports. However, in order to comprehensively increase uplink throughput, improve uplink coverage and/or reduce terminal device costs, it is necessary to propose: a solution for supporting uplink transmission based on at least three antenna ports; and/or a design method for a three-antenna-port codebook; and/or a method for a terminal device to determine a TPMI and a number of layers of a precoding matrix based on a value of a precoding information and number of layers field; and/or an indication method for uplink transmission based on a codebook for three antenna ports; and/or a determination method for an SRS port and/or a PUSCH port, etc.

The foregoing description is intended to provide general background information and does not necessarily constitute the prior art.

### TECHNICAL SOLUTION

A main objective of the present application is to provide a processing method, a communication device and a storage medium, which are used to support uplink transmission based on at least three antenna ports, thereby increasing the uplink throughput, improving the uplink coverage and/or reducing the terminal device costs.

To fulfill the above objective, the present application provides a processing method, which may be applied to a terminal device (e.g., a mobile phone) and includes the following step:
S2: performing uplink transmission based on at least three antenna ports according to downlink information.

Optionally, step S2 includes:
selecting or determining a codebook for at least three antenna ports based on the downlink information;
selecting or determining a precoding matrix from the codebook for at least three antenna ports, for PUSCH transmission.

Optionally, the method further includes at least one of the following:
the downlink information includes radio resource control information and/or downlink control information;
the number of antenna ports is three;
a codebook for three antenna ports includes: a precoding matrix for single-layer transmission, a precoding matrix for two-layer transmission, and a precoding matrix for three-layer transmission.

Optionally, the method further includes at least one of the following:
the precoding matrix for single-layer transmission is obtained by multiplying a first matrix by a first scaling factor;
the precoding matrix for two-layer transmission is obtained by multiplying a second matrix by a second scaling factor;
the precoding matrix for three-layer transmission is obtained by multiplying a third matrix by a third scaling factor;
the radio resource control information includes at least one of the following: SRS resources in an SRS configuration, a PUSCH configuration, a configured grant configuration, and first indication information;
the downlink control information includes at least one of the following: a precoding information and number of layers field, an SRS resource indicator field, second indication information.

Optionally, the method further includes at least one of the following:
the first matrix is obtained by selecting any one column from a 3×3 identity matrix;
the second matrix is formed by selecting any two columns from a 3×3 identity matrix in an order of columns in the matrix, and arranging the two columns in their original order or swapped order;
the second matrix is formed by selecting any two columns from a 3×3 identity matrix in an order of columns in the matrix, multiplying a selected second column by a first phase factor, and then arranging the two columns in their original order;
the third matrix is a 3×3 identity matrix;
the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped;
the third matrix is formed by selecting three columns from a 3×3 identity matrix in an order of columns in the matrix, multiplying a second column by a first phase factor, multiplying a third column by a second phase factor, and then arranging the three columns in their original order.

Optionally, the method further includes at least one of the following:
in the first matrix, one element is a first value and remaining elements are a second value;
in the second matrix and/or the third matrix, one element in each column is a first value, and remaining elements are a second value;
in the second matrix, one element in a first column is a first value, and remaining elements are a second value; one element in a second column is the first phase factor, and remaining elements are the second value;
in the third matrix, one element in a first column is a first value, and remaining elements are a second value; one element in a second column is the first phase factor, and remaining elements are the second value; one element in a third column is the second phase factor, and remaining elements are the second value;
determining a TPMI and the number of layers of the precoding matrix based on the precoding information and number of layers field;
performing PUSCH transmission using the same antenna ports as selected or determined SRS ports of an SRS resource;
performing PUSCH transmission using the same antenna ports as SRS ports of an SRS resource, based on third indication information;
selecting or determining the codebook for three antenna ports based on the downlink information includes at least one of the following:
   determining a codebook based on the number of selected or determined SRS ports of an SRS resource;
   selecting or determining a codebook for three antenna ports based on the first indication information and/or the second indication information.

Optionally, the method further includes at least one of the following:
the first scaling factor is $\frac{1}{\sqrt{3}}$ or 1;
the second scaling factor is at least one of the following: $\frac{1}{\sqrt{3}} , \frac{1}{\sqrt{2}}$ and $\frac{1}{\sqrt{6}}$;
the third scaling factor is $\frac{1}{\sqrt{3}}$ or $\frac{1}{3}$;
the SRS resource is indicated by the SRS resource indicator field;
selecting or determining the SRS ports of the SRS resource includes at least one of the following:
   selecting or determining first three SRS ports of the SRS resource;
   selecting or determining three SRS ports of the SRS resource;
   selecting or determining SRS ports of the SRS resource based on the first indication information and/or the second indication information.

Optionally, the method further includes at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is same as the number of the selected or determined SRS ports of the SRS resource;
the number of the selected or determined SRS ports of the SRS resource is 3;
the selected or determined SRS ports of the SRS resource are 1000, 1001, and 1002 sequentially;
the selected or determined SRS ports of the SRS resource are 1000, 1001 and 1002 in increasing order of initial antenna port numbers;
the first indication information and/or the second indication information indicates to the terminal device to select or determine three SRS ports of the SRS resource, for SRS transmission;
the first indication information includes an SRS port indication parameter;
the second indication information includes an SRS port indicator field;
the first indication information includes a selected SRS port number parameter;
the second indication information includes a selected SRS port number field;
the first indication information includes a three SRS ports of the SRS resource enabling parameter;
the second indication information includes a three SRS ports of the SRS resource enabling field;
the first indication information includes a codebook type parameter;
the second indication information includes a codebook type field;
the third indication information includes a number SRS port for three antenna ports parameter.

Optionally, the method further includes at least one of the following:
adding the SRS port indication parameter in the PUSCH configuration;
adding the SRS port indication parameter in the SRS resource;
adding the SRS port indicator field in the downlink control information;
adding the selected SRS port number parameter in the PUSCH configuration;
adding the selected SRS port number parameter in the SRS resource;
adding the selected SRS port number field in the downlink control information;
adding the three SRS ports of the SRS resource enabling parameter in the PUSCH configuration;
adding the three SRS ports of the SRS resource enabling parameter in the SRS resource;
adding the three SRS ports of the SRS resource enabling field in the downlink control information;
adding the codebook type parameter in the PUSCH configuration;
adding the codebook type parameter in the configured grant configuration;
adding the codebook type field in the downlink control information.

The present application further provides a processing method, which may be applied to a network device (e.g., at least one of a base station, a transmission and reception point, and a satellite) and includes the following step:
S1: sending downlink information, such that a terminal device performs uplink transmission based on at least three antenna ports according to the downlink information.

Optionally, performing, by the terminal device, the uplink transmission based on the at least three antenna ports according to the downlink information includes:
selecting or determining, by the terminal device, a codebook for at least three antenna ports based on the downlink information;
selecting or determining, by the terminal device, a precoding matrix from the codebook for at least three antenna ports, for PUSCH transmission.

Optionally, the method further includes at least one of the following:
the downlink information includes radio resource control information and/or downlink control information;
the number of antenna ports is three;
a codebook for three antenna ports includes: a precoding matrix for single-layer transmission, a precoding matrix for two-layer transmission, and a precoding matrix for three-layer transmission.

Optionally, the method further includes at least one of the following:
the precoding matrix for single-layer transmission is obtained by multiplying a first matrix by a first scaling factor;
the precoding matrix for two-layer transmission is obtained by multiplying a second matrix by a second scaling factor;
the precoding matrix for three-layer transmission is obtained by multiplying a third matrix by a third scaling factor;
the radio resource control information includes at least one of the following: SRS resources in an SRS configuration, a PUSCH configuration, a configured grant configuration, and first indication information;
the downlink control information includes at least one of the following: a precoding information and number of layers field, an SRS resource indicator field, and second indication information.

Optionally, the method further includes at least one of the following:
the first matrix is obtained by selecting any one column from a 3×3 identity matrix;
the second matrix is formed by selecting any two columns from a 3×3 identity matrix in an order of columns in the matrix, and arranging the two columns in their original order or swapped order;
the second matrix is formed by selecting any two columns from a 3×3 identity matrix in an order of columns in the matrix, multiplying a selected second column by a first phase factor, and then arranging the two columns in their original order;
the third matrix is a 3×3 identity matrix;
the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped;
the third matrix is formed by selecting three columns from a 3×3 identity matrix in an order of columns in the matrix, multiplying a second column by a first phase factor, multiplying a third column by a second phase factor, and then arranging the three columns in their original order.

Optionally, the method further includes at least one of the following:
in the first matrix, one element is a first value and remaining elements are a second value;
in the second matrix and/or the third matrix, one element in each column is a first value, and remaining elements are a second value;
in the second matrix, one element in a first column is a first value, and remaining elements are a second value; one element in a second column is the first phase factor, and remaining elements are the second value;
in the third matrix, one element in a first column is a first value, and remaining elements are a second value; one element in a second column is the first phase factor, and remaining elements are the second value; one element in a third column is the second phase factor, and remaining elements are the second value;
the terminal device determines a TPMI and the number of layers of the precoding matrix based on the precoding information and number of layers field;
the terminal device performs PUSCH transmission using the same antenna ports as selected or determined SRS ports of an SRS resource;
the terminal device performs PUSCH transmission using the same antenna ports as SRS ports of an SRS resource, based on third indication information;
selecting or determining, by the terminal device, the codebook for three antenna ports based on the downlink information includes at least one of the following:
   determining a codebook based on the number of the selected or determined SRS ports of the SRS resource;
   selecting or determining a codebook for three antenna ports based on the first indication information and/or the second indication information.

Optionally, the method further includes at least one of the following:
the first scaling factor is $\frac{1}{\sqrt{3}}$ or 1;
the second scaling factor is at least one of the following: $\frac{1}{\sqrt{3}} , \frac{1}{\sqrt{2}}$ and $\frac{1}{\sqrt{6}}$;
the third scaling factor is $\frac{1}{\sqrt{3}}$ or $\frac{1}{3}$;
the SRS resource is indicated by the SRS resource indicator field;
selecting or determining, by the terminal device, the SRS ports of the SRS resource includes at least one of the following:
   selecting or determining, by the terminal device, first three SRS ports of the SRS resource;
   selecting or determining, by the terminal device, three SRS ports of the SRS resource;
   selecting or determining, by the terminal device, SRS ports of the SRS resource based on the first indication information and/or the second indication information.

Optionally, the method further includes at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is same as the number of the selected or determined SRS ports of the SRS resource;
the number of the SRS ports of the SRS resource that are selected or determined by the terminal device is 3;
the SRS ports of the SRS resource that are selected or determined by the terminal device are 1000, 1001 and 1002 sequentially;
the SRS ports of the SRS resource that are selected or determined by the terminal device are 1000, 1001 and 1002 in increasing order of initial antenna port numbers;
the first indication information and/or the second indication information indicates to the terminal device to select or determine three SRS ports of the SRS resource, for SRS transmission;
the first indication information includes an SRS port indication parameter;
the second indication information includes an SRS port indicator field;
the first indication information includes a selected SRS port number parameter;
the second indication information includes a selected SRS port number field;
the first indication information includes a three SRS ports of the SRS resource enabling parameter;
the second indication information includes a three SRS ports of the SRS resource enabling field;
the first indication information includes a codebook type parameter;
the second indication information includes a codebook type field;
the third indication information includes a number SRS port for three antenna ports parameter.

Optionally, the method further includes at least one of the following:
adding the SRS port indication parameter in a PUSCH configuration;
adding the SRS port indication parameter in the SRS resource;
adding the SRS port indicator field in the downlink control information;
adding the selected SRS port number parameter in the PUSCH configuration;
adding the selected SRS port number parameter in the SRS resource;
adding the selected SRS port number field in the downlink control information;
adding the three SRS ports of the SRS resource enabling parameter in the PUSCH configuration;
adding the three SRS ports of the SRS resource enabling parameter in the SRS resource;
adding the three SRS ports of the SRS resource enabling field in the downlink control information;
adding the codebook type parameter in the PUSCH configuration;
adding the codebook type parameter in the configured grant configuration;
adding the codebook type field in the downlink control information.

The present application further provides a processing apparatus. The apparatus includes:
a transmission module, configured to perform uplink transmission based on at least three antenna ports according to downlink information.

The present application further provides a processing apparatus. The apparatus includes:
a sending module, configured to send downlink information, such that a terminal device performs uplink transmission based on at least three antenna ports according to the downlink information.

The present application further provides a communication device. The communication device includes a memory, a processor and a processing program that is stored in the memory and runnable on the processor, and when the processing program is executed by the processor, the steps in any of the above processing methods are implemented.

The communication device in the present application may be a terminal device (e.g., a mobile phone) or a network device (e.g., at least one of a base station, a transmission and reception point, or a satellite), and the specific reference needs to be clarified based on context.

The present application further provides a computer-readable storage medium having a computer program stored therein, and when the computer program is executed by a processor, the steps in any of the above processing methods are implemented.

In the technical solutions of the present application, the terminal device performs uplink transmission based on at least three antenna ports according to downlink information, to support the uplink transmission based on the at least three antenna ports, thereby increasing the uplink throughput, improving the uplink coverage and/or reducing the terminal device costs.

### BRIEF DESCRIPTION OF DRAWINGS

The accompanying drawings herein are incorporated into the description and constitute a part of the present description, show embodiments that are consistent with the present application, and are used together with the description to explain the principles of the present application. To describe the technical solutions in the embodiments of the present application more clearly, the following briefly introduces the accompanying drawings required for describing the embodiments. Apparently, a person of ordinary skill in the art may still derive other drawings from these accompanying drawings without creative efforts.
FIG. 1 is a schematic diagram of a hardware structure of a mobile terminal provided by embodiments of the present application.
FIG. 2 is an architecture diagram of a communication network system provided by an embodiment of the present application.
FIG. 3 is a schematic diagram of a hardware structure of a controller 140 provided by an embodiment of the present application.
FIG. 4 is a schematic diagram of a hardware structure of a network node 150 provided by the present application.
FIG. 5 is a schematic flowchart of a processing method shown by a first embodiment of the present application.
FIG. 6 is a schematic flowchart of a processing method shown by a second embodiment of the present application.
FIG. 7 is a schematic flowchart of a processing method shown by a fourth embodiment of the present application.
FIG. 8 is a schematic flowchart of a processing method shown by a fifth embodiment of the present application.
FIG. 9 is a schematic flowchart of a processing method shown by a sixth embodiment of the present application.
FIG. 10 is a schematic diagram of an interaction process between a network device and a terminal device in a processing method shown by a seventh embodiment of the present application.
FIG. 11 is a first schematic structural diagram of a processing apparatus provided by an embodiment of the present application.
FIG. 12 is a second schematic structural diagram of a processing apparatus provided by an embodiment of the present application.
FIG. 13 is a schematic structural diagram of a communication device provided by an embodiment of the present application.

The achievement of the objectives, functional characteristics and advantages of the present application will be further described in conjunction with the embodiments and with reference to the accompanying drawings. Through the above accompanying drawings, the specific embodiments of the present application have been shown, which will be described in more detail later. These accompanying drawings and text descriptions are not intended to limit the scope of the concept of the present application in any way, but to explain the concept of the present application for those skilled in the art by referring to the specific embodiments.

### EMBODIMENTS OF THE APPLICATION

The exemplary embodiments will be described in detail herein, and examples thereof are shown in the accompanying drawings. When the following description involves the accompanying drawings, unless otherwise indicated, the same numbers in different accompanying drawings indicate the same or similar elements. The implementations described in the following exemplary embodiments are not all the embodiments consistent with the present application. On the contrary, these embodiments are simply examples of apparatuses and methods consistent with some aspects of the present application, as detailed in the appended claims.

It needs to be noted that terms "comprise/include", "containing" or any variation thereof are intended to cover a nonexclusive containing, such that a process, a method, an item or an apparatus containing a series of elements not only includes these elements, but also includes other elements that are not set forth specifically, or also includes an inherent element of such a process, method, item or apparatus. Without further limitation, an element defined by the phrase "including a/an/one..." does not exclude the existence of another identical element in the process, method, item or apparatus including this element, and/or, the same named components, features, and elements in different embodiments of the present application may have the same or different meanings, and their specific meanings need to be determined according to their interpretation in the specific embodiments or further combined with the context of the specific embodiments.

It should be understood that, although the terms "first", "second", "third", etc., may be used to describe various information herein, these should not be limited to these terms. These terms are only used to distinguish information of the same type from each other. For example, "first information" may also be referred to as "second information" without departing from the scope of the present application. Similarly, "second information" may also be referred to as "first information". Depending on the context, the words "if" as used here may be interpreted as "in the event of..." or "when..." or "in response to determining". Furthermore, as used herein, the singular forms "a/an", "one" and "the" are also intended to include the plural, unless the context clearly stated otherwise. It should also be understood that when the terms "contain" and "comprise/include" mean there exists a feature, a step, an operation, an element, a component, an item, a variety, and/or a group, but could not preclude existence, occurrence or addition of one or more other features, steps, operations, elements, components, items, varieties, and/or groups. The terms "or", "and/or", "including at least one of the following", etc., as used in the present application may be construed to be inclusive or to mean any one or any combination thereof. For example, "including at least one of the following: A, B, and C" means "any one of the following: A; B; C; A and B; A and C; B and C; A and B and C", and for example, "A, B or C" or "A, B and/or C" means "any one of the following: A; B; C; A and B; A and C; B and C; A and B and C". Exceptions to this definition occur only when the combinations of elements, functions, steps or operations are inherently mutually exclusive in some way.

It should be understood that although the various steps in a flowchart in the embodiments of the present application are sequentially displayed as indicated by the arrows, these steps are not necessarily performed in the order indicated by the arrows. Except as explicitly stated herein, the execution order of these steps is not strictly limited, and they may be performed in other sequences. In addition, at least some of the steps in the diagrams may include a plurality of sub-steps or a plurality of stages, which are not necessarily executed at the same time, but may be executed at different times. In addition, their order of execution is not necessarily sequential, and they may be executed in turn or alternately with other steps or at least some of the sub-steps or stages of other steps.

Depending on the context, the words "if" and "in case of" as used here may be interpreted as "in the event of..." or "when..." or "in response to determining" or "in response to detecting". Similarly, depending on the context, the phrase "if the ...... is determined" or "if [the stated condition or event] is detected" may be interpreted to mean "when determining......" or "in response to determining......" or "when [the stated condition or event] is detected" or "in response to detecting [the stated condition or event]".

It should be noted that in the present application, step codes such as S1 and S2 are used for the purpose of expressing the corresponding contents more clearly and concisely, and do not constitute any substantial restriction on the order. A person skilled in the art may perform S2 first and then S1, etc., in specific implementation, but these shall be within the protection scope of the present application.

It is to be understood that the specific embodiments described herein are only used for explaining the present application, and are not used for limiting the present application.

In the following description, the use of suffixes such as "module", "component" or "unit" used to denote elements is only conducive to the description of the present application, and has no special meaning themselves. Therefore, "module", "component" or "unit" may be used in a mixed manner.

The communication device in the present application may be a terminal device (e.g., a mobile phone) or a network device (e.g., at least one of a base station, a transmission and reception point, and a satellite), and the specific reference needs to be clarified based on context.

The terminal device may be implemented in various forms. For example, the terminal device described in the present application may include, but is not limited to, a mobile phone, a tablet computer, a notebook computer, a handheld computer, a personal digital assistant (Personal Digital Assistant, PDA), a portable media player (Portable Media Player, PMP), a navigation apparatus, a wearable device, a smart bracelet, a pedometer and other smart terminal devices, as well as a digital TV, a desktop computer and other fixed terminal devices.

A mobile terminal will be used as an example in the following description, and it will be understood by those skilled in the art that the construction according to the embodiments of the present application can also be applied to a terminal device of a stationary type in addition to elements specifically used for a mobile purpose.

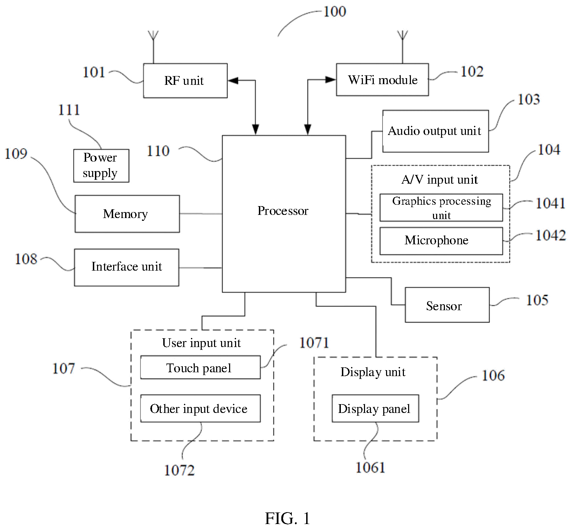

Referring to FIG. 1, FIG. 1 shows a schematic diagram of a hardware structure of a mobile terminal in embodiments of the present application. The mobile terminal 100 may include a radio frequency (Radio Frequency, RF) unit 101, a WiFi module 102, an audio output unit 103, an A/V (audio/video) input unit 104, a sensor 105, a display unit 106, a user input unit 107, an interface unit 108, a memory 109, a processor 110, a power supply 111 and other components. It may be understood by those skilled in the art that the mobile terminal structure shown in FIG. 1 does not constitute any limitation to the mobile terminal, which may include more or less components than those illustrated, or combine some components or adopt different component arrangements.

The components of the mobile terminal are specifically described in detail in combination with FIG. 1.

The radio frequency unit 101 may be configured to receive and transmit signals during the transmission and reception of information or calls. Specifically, downlink information of a base station is received, and then transmitted to the processor 110 for processing. In addition, uplink data is transmitted to the base station. Generally, the radio frequency unit 101 includes, but is not limited to, an antenna, at least one amplifier, a transceiver, a coupler, a low noise amplifier, a duplexer, etc. And/or, the radio frequency unit 101 may also communicate with a network and other devices via wireless communication. The above wireless communication may use any communication standard or protocol, including but not limited to: GSM (Global System for Mobile communication, global system for mobile communication), GPRS (General Packet Radio Service, general packet radio service), CDMA2000 (Code Division Multiple Access 2000, code division multiple access 2000),WCDMA (Wideband Code Division Multiple Access, wideband code division multiple access),TD-SCDMA (Time Division-Synchronous Code Division Multiple Access, time division-synchronous code division multiple access), FDD-LTE (Frequency Division Duplexing-Long Term Evolution, frequency division duplexing-long term evolution), TDD-LTE (Time Division Duplexing-Long Term Evolution, time division duplexing-long term evolution), 5G and 6G, etc.

WiFi is a short-range wireless transmission technology. The mobile terminal may help a user receive and send emails, browse a web and access streaming media through the WiFi module 102, which provides the user with wireless broadband Internet access. Although the WiFi module 102 is shown in FIG. 1, it may be understood that it is not a mandatory component of the mobile terminal and may be omitted as needed without changing the essence of the present invention.

The audio output unit 103 may convert audio data received by the radio frequency unit 101 or the WiFi module 102 or stored in the memory 109 into audio signals and output them as sound when the mobile terminal 100 is in a call signal receiving mode, a call mode, a recording mode, a voice recognition mode, a broadcast receiving mode, etc. Furthermore, the audio output unit 103 may also provide audio output (e.g., call signal reception sound, or message reception sound, etc.) related to a specific function performed by the mobile terminal 100. The audio output unit 103 may include a speaker, a buzzer, etc.

The A/V input unit 104 is configured to receive audio or video signals. The A/V input unit 104 may include a graphics processing unit (Graphics Processing Unit, GPU) 1041 and a microphone 1042. The graphics processing unit 1041 processes image data of still pictures or videos obtained by an image capturing apparatus (e.g., a camera) in a video capture mode or an image capture mode. The processed image frames may be displayed on the display unit 106. The image frames processed by the graphics processing unit 1041 may be stored in the memory 109 (or other storage media) or transmitted via the radio frequency unit 101 or the WiFi module 102. The microphone 1042 may receive sound (audio data) via the microphone 1042 in a telephone call mode, a recording mode, a voice recognition mode, etc., and be able to process such sound into audio data. The processed audio (voice) data may be converted into a format that can be transmitted to a mobile communication base station via the radio frequency unit 101 in the case of the telephone call mode and output. The microphone 1042 may implement various types of noise elimination (or suppression) algorithms to eliminate (or suppress) noise or interference generated during the reception and transmission of audio signals.

The mobile terminal 100 may further include at least one kind of sensors 105, such as a light sensor, a motion sensor, and other sensors. Specifically, the light sensor includes an ambient light sensor and a proximity sensor. Optionally, the ambient light sensor may adjust the brightness of the display panel 1061 according to the brightness of the ambient light. The proximity sensor may turn off the display panel 1061 and/or backlight when the mobile terminal 100 moves close to an ear. As a kind of the motion sensor, an accelerometer sensor may detect the amplitude of the acceleration in each direction (typically in three axes), and may detect the amplitude and the direction of the gravity in a stationary state, which may be used to the applications for recognizing the postures of the mobile phone (such as horizontal and vertical screen switching, relevant games, and posture calibration of a magnetometer), the functions related to vibration recognition (such as a pedometer, and clicking), etc. As for a fingerprint sensor, a pressure sensor, an iris sensor, a molecular sensor, a gyroscope, a barometer, a hygrometer, a thermometer, an infrared sensor and other sensors that can also be configured in the mobile phone, they will not be described here.

The display unit 106 may be configured to display information input by a user or information provided to the user. The display unit 106 may include the display panel 1061. The display panel 1061 may be configured in the form of a liquid crystal display (Liquid Crystal Display, LCD), an organic light-emitting diode (Organic Light-Emitting Diode, OLED), etc.

The user input unit 107 may be configured to receive input digital or character information, and generate key signal input related to user settings and function control of the mobile terminal. Optionally, the user input unit 107 may include a touch panel 1071 and other input devices 1072. The touch panel 1071, also known as a touch screen, may collect touch operations on or near the touch panel from a user (such as an operation on or near the touch panel 1071 by a user using any suitable object or accessory component such as a finger or a stylus), and drive a corresponding connection apparatus according to a predefined program. The touch panel 1071 may include two parts, namely, a touch detection apparatus and a touch controller. Optionally, the touch detection apparatus detects a touching position of a user, detects a signal caused by the touch operation, and transmits the signal to the touch controller. The touch controller receives touch information from the touch detection apparatus, transform it into coordinates of a touch point, and then send them to the processor 110. The touch controller may also receive a command from the processor 110 and execute the command. And/or, the touch panel 1071 may be implemented in various types, such as resistive, capacitive, infrared and acoustic wave types. In addition to the touch panel 1071, the user input unit 107 may also include other input devices 1072. Optionally, the other input devices 1072 may include, but are not limited to, one or more of a physical keyboard, function buttons (e.g., volume control buttons and switch buttons), a trackball, a mouse, an operation lever, and so on, which will not be specifically limited here.

Optionally, the touch panel 1071 may cover the display panel 1061. When the touch panel 1071 detects a touch operation on or near it, the touch operation is transmitted to the processor 110 to determine the type of touch event, and subsequently the processor 110 provides a corresponding visual output on the display panel 1061 according to the type of touch event. Although the touch panel 1071 and the display panel 1061 in FIG. 1 are two separate components to implement the input function and the output function of the mobile terminal, in some embodiments, the touch panel 1071 and the display panel 1061 may be integrated to implement both of the input and output functions of the mobile terminal, which will not be specifically limited here.

The interface unit 108 serves as an interface through which at least one external apparatus may be connected to the mobile terminal 100. For example, the external apparatus may include a wired or wireless headset port, an external power source (or battery charger) port, a wired or wireless data port, a memory card port, a port for connecting an apparatus with a recognition module, an audio input/output (I/O) port, a video I/O port, a headphone port, etc. The interface unit 108 may be configured to receive an input (e.g., data information, or electric power) from the external apparatus and transmit the received input to one or more components within the mobile terminal 100 or may be configured to transmit data between the mobile terminal 100 and the external apparatus.

The memory 109 may be configured to store software programs and various data. The memory 109 may mainly include a program storage region and a data storage region. Optionally, the program storage region may store an operating system, application programs required by at least one function (e.g., a sound playback function or an image playback function). The data storage region may store data (e.g., audio data, and a telephone book) created based on the use of a mobile phone. And/or, the memory 109 may include a high-speed random access memory, and may further include a non-volatile memory, such as at least one magnetic disk storage device, a flash memory device, or other non-volatile solid-state storage devices.

The processor 110 is a control center of the mobile terminal that connects various parts of the entire mobile terminal through various interfaces and circuits, and performs various functions and processing data of the mobile terminal by running and executing software programs and/or modules stored in the memory 109 and by calling the data stored in the memory 109, to monitor the overall mobile terminal. The processor 110 may include one or more processing units. Preferably, the processor 110 may be integrated with an application processor and a modem processor. Optionally, the application processor mainly processes an operation system, a user interface and application programs, etc. The modem processor mainly processes the wireless communication. It may be understood that, the above modem processor may be not integrated in the processor 110.

The mobile terminal 100 may also include a power supply 111 (e.g., a battery) to supply power to each component. Preferably, the power supply 111 may be logically connected to the processor 110 through a power supply management system, to manage the functions such as charging, discharging and power consumption, etc., through the power supply management system.

Although not shown in FIG. 1, the mobile terminal 100 may also include a Bluetooth module, etc., the details of which are not repeated herein.

In order to facilitate the understanding of the embodiments of the present application, a communication network system on which the mobile terminal of the present application is based is described below.

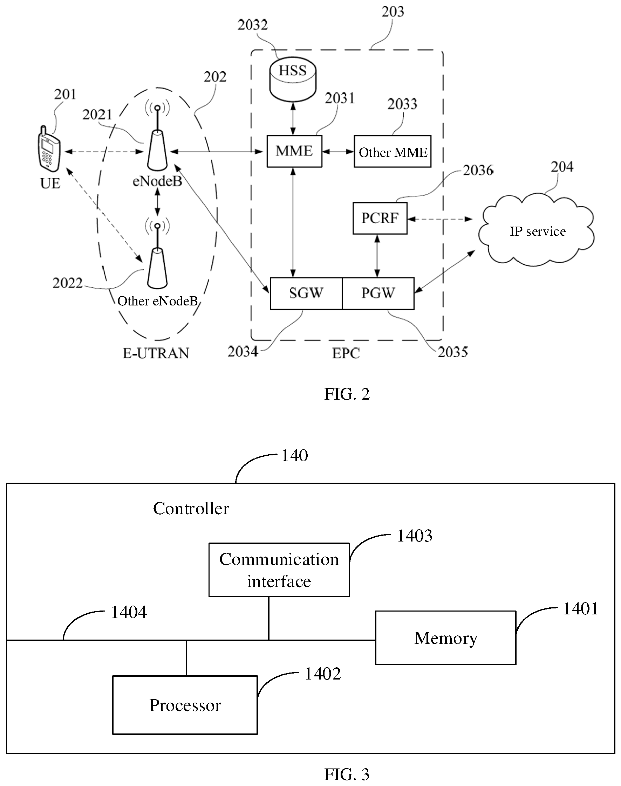

Referring to FIG. 2, FIG. 2 is an architecture diagram of a communication network system provided by an embodiment of the present application. The communication network system is an NR (New Radio, new radio) system of general mobile communication technology, and the NR system includes a UE (User Equipment, user equipment) 201, an E-UTRAN (Evolved UMTS Terrestrial Radio Access Network, evolved UMTS terrestrial radio access network) 202, an EPC (Evolved Packet Core, evolved packet core) 203, and an operator's IP service 204, which are connected sequentially in communication.

Optionally, the UE 201 may be the above-mentioned terminal device 100, which will not be described here.

E-UTRAN 202 includes eNodeB 2021 and other eNodeBs 2022, etc. Optionally, the eNodeB 2021 may be connected to other eNodeB 2022 through backhaul (backhaul) (e.g., an interface X2), the eNodeB 2021 is connected to the EPC 203, and the eNodeB 2021 may provide access from the UE 201 to the EPC 203.

The EPC 203 may include an MME (Mobility Management Entity, mobility management entity) 2031, an HSS (Home Subscriber Server, home subscriber server) 2032, other MMEs 2033, an SGW (Serving Gate Way, serving gate way) 2034, a PGW (PDN Gate Way, packet data network gate way) 2035, a PCRF (Policy and Charging Rules Function, policy and charging rules function) 2036, etc. Optionally, the MME 2031 is a control node that processes signaling between the UE 201 and the EPC 203, providing bearer and connection management. The HSS 2032 is configured to provide some registers to manage functions such as home location registers (not shown) and to save some user-specific information about some relevant service features, data rates, etc. All user data may be sent via the SGW 2034. The PGW 2035 may provide the UE 201 with IP address allocation and other functions. The PCRF 2036 is a policy and charging control strategy decision point for service data flows and IP bearer resources, which selects and provides available policies and charging control decisions for a policy and charging enforcement function unit (not shown).

The IP service 204 may include Internet, Intranet, IMS (IP Multimedia Subsystem, IP multimedia subsystem), or other IP services, etc.

Although the LTE system is described above as an example, a person skilled in the art should know that the present application is not only applicable to the LTE system, but also to other wireless communication systems, such as GSM, CDMA2000, WCDMA, TD-SCDMA, 5G and future new network systems (e.g., 6G), etc., which are not limited here.

FIG. 3 is a schematic diagram of a hardware structure of a controller 140 provided by the present application. The controller 140 includes a memory 1401 and a processor 1402. The memory 1402 is configured to store program instructions. The processor 1402 is configured to call the program instructions in the memory 1401 to execute the steps executed by the controller in the above first method embodiment, which is implemented similarly in terms of principles and beneficial effects, and will not be repeated herein.

Optionally, the above controller further includes a communication interface 1403, which may be connected to the processor 1402 via a bus 1404. The processor 1402 may control the communication interface 1403 to implement receiving and transmitting functions of the controller 140.

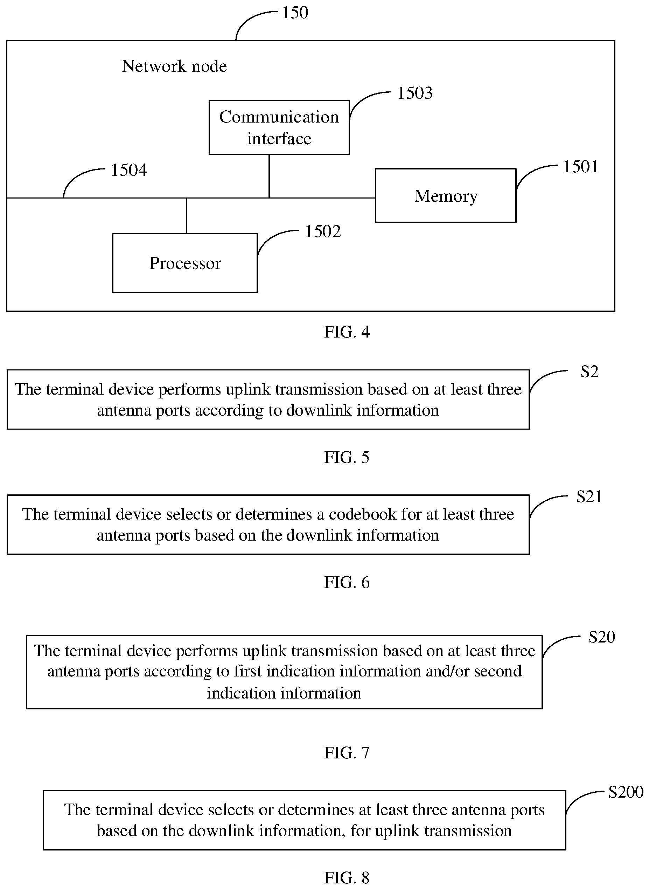

FIG. 4 is a schematic diagram of a hardware structure of a network node 150 provided by the present application. The network node 150 includes a memory 1501 and a processor 1502. The memory 1501 is configured to store program instructions. The processor 1502 is configured to call the program instructions in the memory 1501 to perform the steps performed by the first node in the above first method embodiment, which is implemented similarly in terms of principles and beneficial effects, and will not be repeated herein.

Optionally, the above controller further includes a communication interface 1503, which may be connected to the processor 1502 via a bus 1504. The processor 1502 may control the communication interface 1503 to implement receiving and transmitting functions of the network node 150.

The integrated module, if implemented in the form of a software functional module, may be stored in a computer-readable storage medium. The above-mentioned software function module is stored in a storage medium and includes a plurality of instructions causing a computer device (which may be a personal computer, a server, or a network device, etc.) or a processor (English: processor) to perform part of the steps in the methods in respective embodiments of the present application.

The embodiments may be entirely or partially implemented by software, hardware, firmware or any combination thereof, and may be entirely or partially implemented in the form of a computer program product while being implemented by software. The computer program product includes one or more computer instructions. When the computer program instructions are loaded and executed on the computer, a flow or function described in the embodiments of the present application is generated entirely or partially. The computer may be a general-purpose computer, a special-purpose computer, a computer network, or other programmable apparatuses. The computer instructions may be stored in a storage medium, or transmitted from one storage medium to another storage medium. For example, the computer instructions may be transmitted from a website site, a computer, a server or a data center to another website site, computer, server or data center by means of a wired (e.g., a coaxial cable, an optical fiber, or a digital subscriber line (DSL)) or wireless (e.g., infrared, wireless, or microwave) form. The storage medium may be any available medium that can be accessed by the computer or a data storage device such as a server or a data center, which is integrated with one or more available media. The available medium may be a magnetic medium (e.g., a floppy disk, a hard disk or a magnetic tape), an optical medium (e.g., a DVD), or a semiconductor medium (e.g., a solid state disk (solid state disk, SSD)), etc.

Based on the hardware structure of the above-mentioned mobile terminal and the communication network system, various embodiments of the present application are proposed.

The present application involves the following technical terms:
DCI: Downlink Control Information, downlink control information;
MAC CE: MAC Control Element, medium access control control element;
NR: New Radio, new radio;
PUSCH: Physical Uplink Shared Channel, physical uplink shared channel;
RRC: Radio Resource Control, radio resource control;
SRS: Sounding Reference Signal, sounding reference signal;
TPMI: Transmit Precoding Matrix Indicator, transmit precoding matrix indicator;
UE: User Equipment, user equipment.

### First embodiment

Referring to FIG. 5, FIG. 5 is a schematic flowchart of a processing method shown by a first embodiment of the present application. The processing method in the embodiment of the present application may be applied to a terminal device (e.g., a mobile phone), and includes the following steps.

S2: the terminal device performs uplink transmission based on at least three antenna ports according to downlink information.

The solution of this embodiment supports uplink transmission based on at least three antenna ports, thereby increasing the uplink throughput, improving the uplink coverage and/or reducing the terminal device costs.

Optionally, the downlink information is provided by a network device to the terminal device.

Optionally, the downlink information includes radio resource control information and/or downlink control information.

Optionally, the radio resource control information includes at least one of the following: SRS resources in an SRS configuration, a PUSCH configuration, a configured grant configuration, and first indication information.

Optionally, the downlink control information includes at least one of the following: a precoding information and number of layers field, an SRS resource indicator field (SRS resource indicator), second indication information.

Optionally, the step S2 further includes the following steps:
S21: selecting or determining a codebook for at least three antenna ports based on the downlink information;
S22: selecting or determining a precoding matrix from the codebook for at least three antenna ports, for PUSCH transmission.

Optionally, the number of antenna ports is three, and correspondingly, a codebook for three antenna ports includes: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the first matrix is obtained by selecting any one column from a 3×3 identity matrix.

Optionally, the second matrix is formed by selecting any two columns from a 3×3 identity matrix in an order of columns in the matrix, and arranging the two columns in their original order or swapped order.

Optionally, the second matrix is formed by selecting any two columns from a 3×3 identity matrix in an order of columns in the matrix, multiplying the selected second column by a first phase factor, and then arranging the two columns in their original order.

Optionally, the third matrix is a 3×3 identity matrix.

Optionally, the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped.

Optionally, the third matrix is formed by selecting three columns from a 3×3 identity matrix in an order of columns in the matrix, multiplying the second column by a first phase factor, multiplying the third column by a second phase factor, and then arranging the three columns in their original order.

Optionally, the method further includes at least one of the following:
in the first matrix, one element is a first value and the remaining elements are a second value;
in the second matrix and/or the third matrix, one element in each column is a first value and the remaining elements are a second value;
in the second matrix, one element in the first column is a first value, and the remaining elements are a second value; one element in the second column is the first phase factor, and the remaining elements are the second value;
in the third matrix, one element in the first column is a first value, and the remaining elements are a second value; one element in the second column is the first phase factor, and the remaining elements are the second value; one element in the third column is the second phase factor, and the remaining elements are the second value.

Optionally, the first value is 1, and the second value is 0.

Optionally, the first phase factor is at least one of 1, -1, *j,* and *-j,* and the second phase factor is at least one of 1, -1, *j*, and *-j,* where *j* is an imaginary unit.

Optionally, the first scaling factor is $\frac{1}{\sqrt{3}}$ or 1.

Optionally, the second scaling factor is at least one of the following: $\frac{1}{\sqrt{3}} , \frac{1}{\sqrt{2}}$ and $\frac{1}{\sqrt{6}}$.

Optionally, the third scaling factor is $\frac{1}{\sqrt{3}}$ or $\frac{1}{3}$.

Optionally, taking three antenna ports as an example, the overall processing flow involved in this embodiment may include the following steps.

Step 1: designing or constructing a codebook for three antenna ports, and saving the codebook for three antenna ports in the terminal device and/or the network device.

Step 2: the terminal device reports a terminal device capability value to the network device, to indicate that the current terminal device supports three antenna ports.

Step 3: the terminal device receives downlink information sent by the network device, the downlink information including radio resource control information and/or downlink control information.

Step 4: the terminal device sends an SRS based on SRS resources and/or the downlink information.

Step 5: the network device performs uplink channel estimation based on the received SRS and sends the downlink control information. Optionally, the downlink control information includes a precoding information and number of layers field, and an SRS resource indicator field.

Optionally, the precoding information and number of layers field is used to indicate a TPMI and the number of layers, while the SRS resource indicator field is used to indicate an SRS resource.

Step 6: the terminal device selects a precoding matrix from the codebook for three antenna ports based on the TPMI to perform precoding processing on a PUSCH, and performs transmission.

It should be noted that the steps contained in the above process may be deleted or added according to an actual situation, and the order of various steps may be adjusted according to the actual situation, which will not be specifically limited in this embodiment.

Optionally, selecting or determining, by the terminal device, the codebook for three antenna ports based on the downlink information includes at least one of the following:
determining, by the terminal device, a codebook based on the number of selected or determined SRS ports of the SRS resource;
selecting or determining, by the terminal device, a codebook for three antenna ports based on the first indication information and/or the second indication information.

Optionally, selecting, by the terminal device, the precoding matrix from the codebook for three antenna ports for PUSCH transmission includes at least one of the following:
determining, by the terminal device, the TPMI and the number of layers of the precoding matrix based on the precoding information and number of layers field;
performing, by the terminal device, PUSCH transmission using the same antenna ports as selected or determined SRS ports of the SRS resource;
performing, by the terminal device, PUSCH transmission using the same antenna ports as selected or determined SRS ports of the SRS resource, based on third indication information.

Optionally, the SRS resource is indicated by the SRS resource indicator field.

Optionally, the third indication information includes a number SRS port for three antenna ports parameter.

Optionally, selecting or determining the SRS ports of the SRS resource includes at least one of the following:
selecting or determining the first three SRS ports of the SRS resource;
selecting or determining three SRS ports of the SRS resource;
selecting or determining SRS ports of the SRS resource based on the first indication information and/or the second indication information.

Optionally, the first indication information and/or the second indication information indicates to the terminal device to select or determine three SRS ports of the SRS resource, for SRS transmission.

Optionally, the first indication information includes an SRS port indication parameter.

Optionally, the second indication information includes an SRS port indicator field.

Optionally, the first indication information includes a selected SRS port number parameter.

Optionally, the second indication information includes a selected SRS port number field.

Optionally, the first indication information includes a three SRS ports of the SRS resource enabling parameter.

Optionally, the second indication information includes a three SRS ports of the SRS resource enabling field.

Optionally, the first indication information includes a codebook type parameter.

Optionally, the second indication information includes a codebook type field.

Optionally, the method further includes at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is the same as the number of the selected or determined SRS ports of the SRS resource;
the number of the selected or determined SRS ports of the SRS resource is 3;
the selected or determined SRS ports of the SRS resource are 1000, 1001, and 1002 sequentially;
the selected or determined SRS ports of the SRS resource are 1000, 1001 and 1002 in increasing order of initial antenna port numbers.

Optionally, the method further includes at least one of the following:
adding the SRS port indication parameter in the PUSCH configuration;
adding the SRS port indication parameter in the SRS resource;
adding the SRS port indicator field in the downlink control information;
adding the selected SRS port number parameter in the PUSCH configuration;
adding the selected SRS port number parameter in the SRS resource;
adding the selected SRS port number field in the downlink control information;
adding the three SRS ports of the SRS resource enabling parameter in the PUSCH configuration;
adding the three SRS ports of the SRS resource enabling parameter in the SRS resource;
adding the three SRS ports of the SRS resource enabling field in the downlink control information;
adding the codebook type parameter in the PUSCH configuration;
adding the codebook type parameter in the configured grant configuration;
adding the codebook type field in the downlink control information.

By means of the technical solution in this embodiment, the terminal device performs uplink transmission based on at least three antenna ports according to the downlink information, to support the uplink transmission based on the at least three antenna ports, thereby increasing the uplink throughput, improving the uplink coverage and/or reducing the terminal device costs.

### Second embodiment

Referring to FIG. 6, FIG. 6 is a schematic flowchart of a processing method shown by a second embodiment of the present application. The second embodiment of the present application proposes a processing method, which is explained mainly for a design method for a codebook for three antenna ports.

The processing method in this embodiment of the present application may be applied to a terminal device (e.g., a mobile phone) and includes the following steps.

S21: the terminal device selects or determines a codebook for at least three antenna ports based on the downlink information.

Optionally, in this embodiment, the terminal device selects or determines the codebook for at least three antenna ports based on the downlink information, to perform PUSCH transmission based on the selected or determined codebook for at least three antenna ports.

Optionally, selecting or determining a codebook for three antenna ports based on the downlink information includes at least one of the following:
determining a codebook based on the number of selected or determined SRS ports of an SRS resource;
selecting or determining a codebook for three antenna ports based on first indication information and/or second indication information.

Optionally, performing, by the terminal device, PUSCH transmission based on the selected or determined codebook for at least three antenna ports may include: selecting or determining, by the terminal device, a precoding matrix from the selected or determined codebook for at least three antenna ports, for PUSCH transmission.

Optionally, a specific implementation solution of selecting or determining, by the terminal device, the precoding matrix from the selected or determined codebook for at least three antenna ports for PUSCH transmission may be found in the above first embodiment, and will not be repeated here.

The solution of this embodiment supports uplink transmission based on at least three antenna ports, thereby increasing the uplink throughput, improving the uplink coverage and/or reducing the terminal device costs.

Optionally, the number of antenna ports is three.

Optionally, the codebook for three antenna ports is a set of precoding matrices of three antenna ports, where the precoding matrices map transport layers onto three antenna transceiver units.

Optionally, the codebook for three antenna ports includes: a precoding matrix for single-layer transmission, a precoding matrix for two-layer transmission, and a precoding matrix for three-layer transmission.

Optionally, the optional solutions designed for a non-coherent codebook for three antenna ports may include at least one of a first solution, a first solution and a third solution as follows.

### First solution

Optionally, the codebook for three antenna ports includes: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the first matrix is obtained by selecting any one column from a 3×3 identity matrix. The first matrix is a vector having three rows and one column. In the first matrix, one element is a first value, and the remaining elements are a second value.

Optionally, the second matrix is formed by selecting any two columns from a 3×3 identity matrix in the order of columns in the matrix, and arranging the two columns in their original order. The second matrix is a matrix having three rows and two columns. In the second matrix, one element in each column is a first value, and the remaining elements are a second value.

Optionally, the third matrix is a 3×3 identity matrix. In the third matrix, one element in each column is a first value, and the remaining elements are a second value.

Optionally, the number of antenna ports used in each of the precoding matrix for single-layer transmission, the precoding matrix for two-layer transmission and the precoding matrix for three-layer transmission is three, or the number of antenna ports of each of the precoding matrix for single-layer transmission, the precoding matrix for two-layer transmission and the precoding matrix for three-layer transmission is three.

Optionally, the first value is 1, and the second value is 0.

Optionally, the first scaling factor is $\frac{1}{\sqrt{3}}$ or 1.

Optionally, the second scaling factor is at least one of the following: $\frac{1}{\sqrt{3}} , \frac{1}{\sqrt{2}}$ and $\frac{1}{\sqrt{6}}$.

Optionally, the third scaling factor is $\frac{1}{\sqrt{3}}$ or $\frac{1}{3}$.

Optionally, the first matrix is obtained by selecting any one column from the 3×3 identity matrix, which includes at least one of the following solutions: obtaining $\left[\begin{matrix}1 \\ 0 \\ 0\end{matrix}\right]$ by selecting the first column, obtaining $\left[\begin{matrix}0 \\ 1 \\ 0\end{matrix}\right]$ by selecting the second column, and obtaining $\left[\begin{matrix}0 \\ 0 \\ 1\end{matrix}\right]$ by selecting the third column. Therefore, the first matrix includes at least one of the following: $\left[\begin{matrix}1 \\ 0 \\ 0\end{matrix}\right] , \left[\begin{matrix}0 \\ 1 \\ 0\end{matrix}\right]$ and $\left[\begin{matrix}0 \\ 0 \\ 1\end{matrix}\right]$. Optionally, the first scaling factor is $\frac{1}{\sqrt{3}}$ or 1. The precoding matrix for single-layer transmission is represented by *W*. A corresponding relationship between the TPMI and the precoding matrix has the following optional solutions.

Optionally, the first scaling factor is $\frac{1}{\sqrt{3}}$, the precoding matrix *W* for single-layer transmission includes at least one of the following: $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$, and a corresponding relationship between the TPMI and the precoding matrix may be as shown in Table 1 below:

**Table 1: Precoding matrix W for single-layer transmission**

| TPMI index value | *W* | | | |
|---|---|---|---|---|
| | (Sorted from left to right in increasing order of TPMI index values) | | | |
| 0-2 | $\frac{1}{\sqrt{3}} \left[\begin{matrix}1 \\ 0 \\ 0\end{matrix}\right]$ | $\frac{1}{\sqrt{3}} \left[\begin{matrix}0 \\ 1 \\ 0\end{matrix}\right]$ | $\frac{1}{\sqrt{3}} \left[\begin{matrix}0 \\ 0 \\ 1\end{matrix}\right]$ | - |

Optionally, the first scaling factor is 1, the precoding matrix W for single-layer transmission includes at least one of the following: $\left[\begin{matrix}1 \\ 0 \\ 0\end{matrix}\right] , \left[\begin{matrix}0 \\ 1 \\ 0\end{matrix}\right]$ and $\left[\begin{matrix}0 \\ 0 \\ 1\end{matrix}\right]$, and a corresponding relationship between the TPMI and the precoding matrix may be as shown in Table 2 below:

**Table 2: Precoding matrix W for single-layer transmission**

| TPMI index value | *W* | | | |
|---|---|---|---|---|
| | (Sorted from left to right in increasing order of TPMI index values) | | | |
| 0-2 | $\left[\begin{matrix}1 \\ 0 \\ 0\end{matrix}\right]$ | $\left[\begin{matrix}0 \\ 1 \\ 0\end{matrix}\right]$ | $\left[\begin{matrix}0 \\ 0 \\ 1\end{matrix}\right]$ | - |

Optionally, the second matrix is formed by selecting any two columns from the 3×3 identity matrix in the order of columns in the matrix, and arranging the two columns in their original order, which includes at least one of the following solutions: forming $\left[\begin{matrix}1 & 0 \\ 0 & 1 \\ 0 & 0\end{matrix}\right]$ by selecting and arranging the first column and the second column in their original order, forming $\left[\begin{matrix}1 & 0 \\ 0 & 0 \\ 0 & 1\end{matrix}\right]$ by selecting and arranging the first column and the third column in their original order, and forming $\left[\begin{matrix}0 & 0 \\ 1 & 0 \\ 0 & 1\end{matrix}\right]$ by selecting and arranging the second column and the third column in their original order. Therefore, the second matrix includes at least one of the following: $\left[\begin{matrix}1 & 0 \\ 0 & 1 \\ 0 & 0\end{matrix}\right] , \left[\begin{matrix}1 & 0 \\ 0 & 0 \\ 0 & 1\end{matrix}\right]$ and $\left[\begin{matrix}0 & 0 \\ 1 & 0 \\ 0 & 1\end{matrix}\right]$. Optionally, the second scaling factor is $\frac{1}{\sqrt{3}}$ or $\frac{1}{\sqrt{2}}$. The precoding matrix for two-layer transmission is represented by W. A corresponding relationship between the TPMI and the precoding matrix has the following optional solutions.

Optionally, the second scaling factor is $\frac{1}{\sqrt{3}} ,$, the precoding matrix for two-layer transmission includes at least one of the following: $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right]$, and $\frac{1}{\sqrt{3}} \left[\begin{matrix}0 & 0 \\ 1 & 0 \\ 0 & 1\end{matrix}\right]$, and a corresponding relationship between the TPMI and the precoding matrix may be as shown in Table 3 below:

**Table 3: Precoding matrix W for two-layer transmission**

| TPMI index value | W | | | |
|---|---|---|---|---|
| | (Sorted from left to right in increasing order of TPMI index values) | | | |
| 0-2 | $\frac{1}{\sqrt{3}} \left[\begin{matrix}1 & 0 \\ 0 & 1 \\ 0 & 0\end{matrix}\right]$ | $\frac{1}{\sqrt{3}} \left[\begin{matrix}1 & 0 \\ 0 & 0 \\ 0 & 1\end{matrix}\right]$ | $\frac{1}{\sqrt{3}} \left[\begin{matrix}0 & 0 \\ 1 & 0 \\ 0 & 1\end{matrix}\right]$ | - |

Optionally, the second scaling factor is $\frac{1}{\sqrt{2}}$, the precoding matrix for two-layer transmission includes at least one of the following: $\frac{1}{\sqrt{2}} \left[\begin{matrix}1 & 0 \\ 0 & 1 \\ 0 & 0\end{matrix}\right] , \frac{1}{\sqrt{2}} \left[\begin{matrix}1 & 0 \\ 0 & 0 \\ 0 & 1\end{matrix}\right]$ and $\frac{1}{\sqrt{2}} \left[\begin{matrix}0 & 0 \\ 1 & 0 \\ 0 & 1\end{matrix}\right]$, and a corresponding relationship between the TPMI and the precoding matrix may be as shown in Table 4 below:

**Table 4: Precoding matrix W for two-layer transmission**

| TPMI index value | W | | | |
|---|---|---|---|---|
| | (Sorted from left to right in increasing order of TPMI index values) | | | |
| 0-2 | $\frac{1}{\sqrt{2}} \left[\begin{matrix}1 & 0 \\ 0 & 1 \\ 0 & 0\end{matrix}\right]$ | $\frac{1}{\sqrt{2}} \left[\begin{matrix}1 & 0 \\ 0 & 0 \\ 0 & 1\end{matrix}\right]$ | $\frac{1}{\sqrt{2}} \left[\begin{matrix}0 & 0 \\ 1 & 0 \\ 0 & 1\end{matrix}\right]$ | - |

Optionally, the third matrix is the 3×3 identity matrix. Therefore, the third matrix includes at least one of the following: $\left[\begin{matrix}1 & 0 & 0 \\ 0 & 1 & 0 \\ 0 & 0 & 1\end{matrix}\right]$. Optionally, the third scaling factor is $\frac{1}{\sqrt{3}}$. The precoding matrix for three-layer transmission is represented by W. A corresponding relationship between the TPMI and the precoding matrix has the following optional solution.

Optionally, the third scaling factor is $\frac{1}{\sqrt{3}}$, the precoding matrix W for three-layer transmission includes at least one of the following: $\frac{1}{\sqrt{3}} \left[\begin{matrix}1 & 0 & 0 \\ 0 & 1 & 0 \\ 0 & 0 & 1\end{matrix}\right]$, and a corresponding relationship between the TPMI and the precoding matrix may be as shown in Table 5 below:

**Table 5: Precoding matrix W for three-layer transmission**

| TPMI index value | *W* | | | |
|---|---|---|---|---|
| | (Sorted from left to right in increasing order of TPMI index values) | | | |
| 0-2 | $\frac{1}{\sqrt{3}} \left[\begin{matrix}1 & 0 & 0 \\ 0 & 1 & 0 \\ 0 & 0 & 1\end{matrix}\right]$ | - | - | - |

Optionally, the precoding matrix for single-layer transmission, the precoding matrix for two-layer transmission and the precoding matrix for three-layer transmission are applicable to a scenario in which transform precoding is enabled or disabled.

### Second solution

Optionally, the codebook for three antenna ports includes: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the first matrix is obtained by selecting any one column from a 3×3 identity matrix. The first matrix is a vector having three rows and one column. In the first matrix, one element is a first value, and the remaining elements are a second value.

Optionally, the second matrix is formed by selecting any two columns from a 3×3 identity matrix in the order of columns in the matrix, and arranging the two columns in their original order and/or swapped order. The second matrix is a matrix having three rows and two columns. In the second matrix, one element in each column is a first value, and the remaining elements are a second value.

Optionally, the third matrix is formed by selecting three columns from a 3×3 identity matrix in the order of columns in the matrix, and arranging the three columns in at least one of the following ways: arranging the three columns in their original order, arranging the three columns with any two of the three columns swapped, and arranging the three columns with all of the three columns swapped. The third matrix is a 3×3 matrix. In the third matrix, one element in each column is a first value, and the remaining elements are a second value.

Optionally, the number of antenna ports used in each of the precoding matrix for single-layer transmission, the precoding matrix for two-layer transmission and the precoding matrix for three-layer transmission is three, or the number of antenna ports of each of the precoding matrix for single-layer transmission, the precoding matrix for two-layer transmission and the precoding matrix for three-layer transmission is three.

Optionally, the first value is 1, and the second value is 0.

Optionally, the first matrix is obtained by selecting any one column from the 3×3 identity matrix, which includes at least one of the following solutions: obtaining $\left[\begin{matrix}1 \\ 0 \\ 0\end{matrix}\right]$ by selecting the first column, obtaining $\left[\begin{matrix}0 \\ 1 \\ 0\end{matrix}\right]$ by selecting the second column, and obtaining $\left[\begin{matrix}0 \\ 0 \\ 1\end{matrix}\right]$ by selecting the third column. Therefore, the first matrix includes at least one of the following: $\left[\begin{matrix}1 \\ 0 \\ 0\end{matrix}\right] , \left[\begin{matrix}0 \\ 1 \\ 0\end{matrix}\right]$ and $\left[\begin{matrix}0 \\ 0 \\ 1\end{matrix}\right]$. Optionally, the first scaling factor is $\frac{1}{\sqrt{3}}$ or 1. The precoding matrix for single-layer transmission is represented by W. A corresponding relationship between the TPMI and the precoding matrix has the following optional solutions:
The first scaling factor is $\frac{1}{\sqrt{3}}$, the precoding matrix W for single-layer transmission includes at least one of the following: $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$, and a corresponding relationship between the TPMI and the precoding matrix may be as shown in Table 6 below:

**Table 6: Precoding matrix W for single-layer transmission**

| TPMI index value | *W* | | | |
|---|---|---|---|---|
| | (Sorted from left to right in increasing order of TPMI index values) | | | |
| 0-2 | $\frac{1}{\sqrt{3}} \left[\begin{matrix}1 \\ 0 \\ 0\end{matrix}\right]$ | $\frac{1}{\sqrt{3}} \left[\begin{matrix}0 \\ 1 \\ 0\end{matrix}\right]$ | $\frac{1}{\sqrt{3}} \left[\begin{matrix}0 \\ 0 \\ 1\end{matrix}\right]$ | - |

Optionally, the first scaling factor is 1, the precoding matrix W for single-layer transmission includes at least one of the following: $\left[\begin{matrix}1 \\ 0 \\ 0\end{matrix}\right] , \left[\begin{matrix}0 \\ 1 \\ 0\end{matrix}\right]$ and $\left[\begin{matrix}0 \\ 0 \\ 1\end{matrix}\right]$, and a corresponding relationship between the TPMI and the precoding matrix may be as shown in Table 7 below:

**Table 7: Precoding matrix W for single-layer transmission**

| TPMI index value | *W* | | | |
|---|---|---|---|---|
| | (Sorted from left to right in increasing order of TPMI index values) | | | |
| 0-2 | $\left[\begin{matrix}1 \\ 0 \\ 0\end{matrix}\right]$ | $\left[\begin{matrix}0 \\ 1 \\ 0\end{matrix}\right]$ | $\left[\begin{matrix}0 \\ 0 \\ 1\end{matrix}\right]$ | - |

Optionally, the second matrix is formed by selecting any two columns from the 3×3 identity matrix in the order of columns in the matrix, and arranging the two columns in their original order and/or swapped order, which includes at least one of the following solutions: forming $\left[\begin{matrix}1 & 0 \\ 0 & 1 \\ 0 & 0\end{matrix}\right]$1 by selecting and arranging the first column and the second column in their original order, forming $\left[\begin{matrix}0 & 1 \\ 1 & 0 \\ 0 & 0\end{matrix}\right]$ by selecting and arranging the first column and the second column in a swapped order, forming $\left[\begin{matrix}1 & 0 \\ 0 & 0 \\ 0 & 1\end{matrix}\right]$ by selecting and arranging the first column and the third column in their original order, forming $\left[\begin{matrix}0 & 1 \\ 0 & 0 \\ 1 & 0\end{matrix}\right]$ by selecting and arranging the first column and the third column in a swapped order, forming $\left[\begin{matrix}0 & 0 \\ 1 & 0 \\ 0 & 1\end{matrix}\right]$ by selecting and arranging the second column and the third column in their original order, and forming $\left[\begin{matrix}0 & 0 \\ 0 & 1 \\ 1 & 0\end{matrix}\right]$1 by selecting and arranging the second column and the third column in a swapped order. Therefore, the second matrix includes at least one of the following: $\left[\begin{matrix}1 & 0 \\ 0 & 1 \\ 0 & 0\end{matrix}\right] , \left[\begin{matrix}1 & 0 \\ 0 & 0 \\ 0 & 1\end{matrix}\right] , \left[\begin{matrix}0 & 1 \\ 1 & 0 \\ 0 & 0\end{matrix}\right] , \left[\begin{matrix}0 & 0 \\ 1 & 0 \\ 0 & 1\end{matrix}\right] , \left[\begin{matrix}0 & 1 \\ 0 & 0 \\ 1 & 0\end{matrix}\right]$ and $\left[\begin{matrix}0 & 0 \\ 0 & 1 \\ 1 & 0\end{matrix}\right]$. Optionally, the second scaling factor is $\frac{1}{\sqrt{3}}$ or $\frac{1}{\sqrt{2}}$. The precoding matrix for two-layer transmission is represented by *W*. A corresponding relationship between the TPMI and the precoding matrix has the following optional solutions.

Optionally, the second scaling factor is $\frac{1}{\sqrt{3}}$, the precoding matrix for two-layer transmission includes at least one of the following: $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & 0 \\ 0 & 1\end{matrix}\right] , \frac{1}{\sqrt{3}} \left[\begin{matrix}0 & 1 \\ 1 & 0 \\ 0 & 0\end{matrix}\right] , \frac{1}{\sqrt{3}} \left[\begin{matrix}0 & 0 \\ 1 & 0 \\ 0 & 1\end{matrix}\right] , \frac{1}{\sqrt{3}} \left[\begin{matrix}0 & 1 \\ 0 & 0 \\ 1 & 0\end{matrix}\right]$ and $\frac{1}{\sqrt{3}} \left[\begin{matrix}0 & 0 \\ 0 & 1 \\ 1 & 0\end{matrix}\right]$, and a corresponding relationship between the TPMI and the precoding matrix may be as shown in Table 8 below:

**Table 8: Precoding matrix W for two-layer transmission**

| TPMI index value | *W* | | | |
|---|---|---|---|---|
| | (Sorted from left to right in increasing order of TPMI index values) | | | |
| 0-3 | $\frac{1}{\sqrt{3}} \left[\begin{matrix}1 & 0 \\ 0 & 1 \\ 0 & 0\end{matrix}\right]$ | $\frac{1}{\sqrt{3}} \left[\begin{matrix}1 & 0 \\ 0 & 0 \\ 0 & 1\end{matrix}\right]$ | $\frac{1}{\sqrt{3}} \left[\begin{matrix}0 & 1 \\ 1 & 0 \\ 0 & 0\end{matrix}\right]$ | $\frac{1}{\sqrt{3}} \left[\begin{matrix}0 & 0 \\ 1 & 0 \\ 0 & 1\end{matrix}\right]$ |
| 4-5 | $\frac{1}{\sqrt{3}} \left[\begin{matrix}0 & 1 \\ 0 & 0 \\ 1 & 0\end{matrix}\right]$ | $\frac{1}{\sqrt{3}} \left[\begin{matrix}0 & 0 \\ 0 & 1 \\ 1 & 0\end{matrix}\right]$ | - | - |

Optionally, the second scaling factor is $\frac{1}{\sqrt{2}}$, the precoding matrix for two-layer transmission includes at least one of the following: $\frac{1}{\sqrt{2}} \left[\begin{matrix}1 & 0 \\ 0 & 1 \\ 0 & 0\end{matrix}\right] , \frac{1}{\sqrt{2}} \left[\begin{matrix}1 & 0 \\ 0 & 0 \\ 0 & 1\end{matrix}\right] , \frac{1}{\sqrt{2}} \left[\begin{matrix}0 & 1 \\ 1 & 0 \\ 0 & 0\end{matrix}\right] , \frac{1}{\sqrt{2}} \left[\begin{matrix}0 & 0 \\ 1 & 0 \\ 0 & 1\end{matrix}\right] , \frac{1}{\sqrt{2}} \left[\begin{matrix}0 & 1 \\ 0 & 0 \\ 1 & 0\end{matrix}\right]$ and $\frac{1}{\sqrt{2}} \left[\begin{matrix}0 & 0 \\ 0 & 1 \\ 1 & 0\end{matrix}\right]$, and a corresponding relationship between the TPMI and the precoding matrix may be as shown in Table 9 below:

**Table 9: Precoding matrix W for two-layer transmission**

| TPMI index value | *W* | | | |
|---|---|---|---|---|
| | (Sorted from left to right in increasing order of TPMI index values) | | | |
| 0-3 | $\frac{1}{\sqrt{2}} \left[\begin{matrix}1 & 0 \\ 0 & 1 \\ 0 & 0\end{matrix}\right]$ | $\frac{1}{\sqrt{2}} \left[\begin{matrix}1 & 0 \\ 0 & 0 \\ 0 & 1\end{matrix}\right]$ | $\frac{1}{\sqrt{2}} \left[\begin{matrix}0 & 1 \\ 1 & 0 \\ 0 & 0\end{matrix}\right]$ | $\frac{1}{\sqrt{2}} \left[\begin{matrix}0 & 0 \\ 1 & 0 \\ 0 & 1\end{matrix}\right]$ |
| 4-5 | $\frac{1}{\sqrt{2}} \left[\begin{matrix}0 & 1 \\ 0 & 0 \\ 1 & 0\end{matrix}\right]$ | $\frac{1}{\sqrt{2}} \left[\begin{matrix}0 & 0 \\ 0 & 1 \\ 1 & 0\end{matrix}\right]$ | - | - |

Optionally, the third matrix is formed by selecting three columns from the 3×3 identity matrix in the order of columns in the matrix, and arranging the three columns in at least one of the following ways: arranging the three columns in their original order, arranging the three columns with any two of the three columns swapped, and arranging the three columns with all of the three columns swapped, which includes at least one of the following solutions: forming $\left[\begin{matrix}1 & 0 & 0 \\ 0 & 1 & 0 \\ 0 & 0 & 1\end{matrix}\right]$ by selecting three columns in the order of columns in the matrix and arranging the three columns in their original order, forming $\left[\begin{matrix}0 & 1 & 0 \\ 1 & 0 & 0 \\ 0 & 0 & 1\end{matrix}\right]$ by selecting three columns in the order of columns in the matrix and arranging the three columns with the first column and the second column swapped, forming $\left[\begin{matrix}0 & 0 & 1 \\ 0 & 1 & 0 \\ 1 & 0 & 0\end{matrix}\right]$ by selecting three columns in the order of columns in the matrix and arranging the three columns with the first column and the third column swapped, forming $\left[\begin{matrix}1 & 0 & 0 \\ 0 & 0 & 1 \\ 0 & 1 & 0\end{matrix}\right]$ by selecting three columns in the order of columns in the matrix and arranging the three columns with the second column and the third column swapped, forming $\left[\begin{matrix}0 & 0 & 1 \\ 1 & 0 & 0 \\ 0 & 1 & 0\end{matrix}\right]$ by selecting three columns in the order of columns in the matrix and arranging the three columns with all of the three columns swapped, and forming $\left[\begin{matrix}0 & 1 & 0 \\ 0 & 0 & 1 \\ 1 & 0 & 0\end{matrix}\right]$1 by selecting three columns in the order of columns in the matrix and arranging the three columns with all of the three columns swapped. Therefore, the third matrix includes at least one of the following: $\left[\begin{matrix}1 & 0 & 0 \\ 0 & 1 & 0 \\ 0 & 0 & 1\end{matrix}\right] , \left[\begin{matrix}1 & 0 & 0 \\ 0 & 0 & 1 \\ 0 & 1 & 0\end{matrix}\right] , \left[\begin{matrix}0 & 1 & 0 \\ 1 & 0 & 0 \\ 0 & 0 & 1\end{matrix}\right] , \left[\begin{matrix}0 & 0 & 1 \\ 1 & 0 & 0 \\ 0 & 1 & 0\end{matrix}\right] , \left[\begin{matrix}0 & 1 & 0 \\ 0 & 0 & 1 \\ 1 & 0 & 0\end{matrix}\right]$ and $\left[\begin{matrix}0 & 0 & 1 \\ 0 & 1 & 0 \\ 1 & 0 & 0\end{matrix}\right]$. Optionally, the third scaling factor is $\frac{1}{\sqrt{3}}$. The precoding matrix for three-layer transmission is represented by *W*. A corresponding relationship between the TPMI and the precoding matrix has the following optional solution.

Optionally, the third scaling factor is $\frac{1}{\sqrt{3}}$, the precoding matrix *W* for three-layer transmission includes at least one of the following: $\frac{1}{\sqrt{3}} \left[\begin{matrix}1 & 0 & 0 \\ 0 & 1 & 0 \\ 0 & 0 & 1\end{matrix}\right] , \frac{1}{\sqrt{3}} \left[\begin{matrix}1 & 0 & 0 \\ 0 & 0 & 1 \\ 0 & 1 & 0\end{matrix}\right] , \frac{1}{\sqrt{3}} \left[\begin{matrix}0 & 1 & 0 \\ 1 & 0 & 0 \\ 0 & 0 & 1\end{matrix}\right]$, $\frac{1}{\sqrt{3}} \left[\begin{matrix}0 & 0 & 1 \\ 1 & 0 & 0 \\ 0 & 1 & 0\end{matrix}\right] , \frac{1}{\sqrt{3}} \left[\begin{matrix}0 & 1 & 0 \\ 0 & 0 & 1 \\ 1 & 0 & 0\end{matrix}\right]$ and $\frac{1}{\sqrt{3}} \left[\begin{matrix}0 & 0 & 1 \\ 0 & 1 & 0 \\ 1 & 0 & 0\end{matrix}\right]$, and a corresponding relationship between the TPMI and the precoding matrix may be as shown in Table 10 below:

**Table 10: Precoding matrix W for three-layer transmission**

| TPMI index value | *W* | | | |
|---|---|---|---|---|
| | (Sorted from left to right in increasing order of TPMI index values) | | | |
| 0-3 | $\frac{1}{\sqrt{3}} \left[\begin{matrix}1 & 0 & 0 \\ 0 & 1 & 0 \\ 0 & 0 & 1\end{matrix}\right]$ | $\frac{1}{\sqrt{3}} \left[\begin{matrix}1 & 0 & 0 \\ 0 & 0 & 1 \\ 0 & 1 & 0\end{matrix}\right]$ | $\frac{1}{\sqrt{3}} \left[\begin{matrix}0 & 1 & 0 \\ 1 & 0 & 0 \\ 0 & 0 & 1\end{matrix}\right]$ | $\frac{1}{\sqrt{3}} \left[\begin{matrix}0 & 0 & 1 \\ 1 & 0 & 0 \\ 0 & 1 & 0\end{matrix}\right]$ |
| 4-5 | $\frac{1}{\sqrt{3}} \left[\begin{matrix}0 & 1 & 0 \\ 0 & 0 & 1 \\ 1 & 0 & 0\end{matrix}\right]$ | $\frac{1}{\sqrt{3}} \left[\begin{matrix}0 & 0 & 1 \\ 0 & 1 & 0 \\ 1 & 0 & 0\end{matrix}\right]$ | - | - |

Optionally, the precoding matrix for single-layer transmission, the precoding matrix for two-layer transmission and the precoding matrix for three-layer transmission are applicable to a scenario in which transform precoding is enabled or disabled.

### Third solution

Optionally, the codebook for three antenna ports includes: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the first matrix is obtained by selecting any one column from a 3×3 identity matrix. The first matrix is a vector having three rows and one column. In the first matrix, one element is a first value and the remaining elements are a second value.

Optionally, the second matrix is formed by selecting any two columns from a 3×3 identity matrix in the order of columns in the matrix, multiplying the selected second column by a first phase factor, and then arranging the two columns in their original order. The second matrix is a matrix having three rows and two columns. In the second matrix, one element in the first column is a first value, and the remaining elements are a second value; and one element in the second column is the first phase factor, and the remaining elements are the second value.

Optionally, the third matrix is formed by selecting three columns from a 3×3 identity matrix in the order of columns in the matrix, multiplying the second column by a first phase factor, multiplying the third column by a second phase factor, and then arranging the three columns in their original order. The third matrix is a 3×3 matrix. In the third matrix, one element in the first column is a first value, and the remaining elements are a second value; one element in the second column is the first phase factor, and the remaining elements are the second value; and one element in the third column is the second phase factor, and the remaining elements are the second value.

Optionally, the number of antenna ports used in each of the precoding matrix for single-layer transmission, the precoding matrix for two-layer transmission and the precoding matrix for three-layer transmission is three, or the number of antenna ports of each of the precoding matrix for single-layer transmission, the precoding matrix for two-layer transmission and the precoding matrix for three-layer transmission is three.

Optionally, the first value is 1; the second value is 0; the first phase factor is at least one of 1, *-*1*, j*, and *-j;* and the second phase factor is at least one of 1, -1, *j,* and *-j,* where *j* is an imaginary unit.

Optionally, the first matrix is obtained by selecting any one column from the 3×3 identity matrix, which includes at least one of the following solutions: obtaining $\left[\begin{matrix}1 \\ 0 \\ 0\end{matrix}\right]$ by selecting the first column, obtaining $\left[\begin{matrix}0 \\ 1 \\ 0\end{matrix}\right]$ by selecting the second column, and obtaining $\left[\begin{matrix}0 \\ 0 \\ 1\end{matrix}\right]$ by selecting the third column. Therefore, the first matrix includes at least one of the following: $\left[\begin{matrix}1 \\ 0 \\ 0\end{matrix}\right] , \left[\begin{matrix}0 \\ 1 \\ 0\end{matrix}\right]$ and $\left[\begin{matrix}0 \\ 0 \\ 1\end{matrix}\right]$. Optionally, the first scaling factor is $\frac{1}{\sqrt{3}}$ or 1. The precoding matrix for single-layer transmission is represented by *W*. A corresponding relationship between the TPMI and the precoding matrix has the following optional solutions.

Optionally, the first scaling factor is $\frac{1}{\sqrt{3}}$, the precoding matrix *W* for single-layer transmission includes at least one of the following: $\frac{1}{\sqrt{3}} \left[\begin{matrix}1 \\ 0 \\ 0\end{matrix}\right] , \frac{1}{\sqrt{3}} \left[\begin{matrix}0 \\ 1 \\ 0\end{matrix}\right]$ and $\frac{1}{\sqrt{3}} \left[\begin{matrix}0 \\ 0 \\ 1\end{matrix}\right]$, and a corresponding relationship between the TPMI and the precoding matrix may be as shown in Table 11 below:

**Table 11: Precoding matrix W for single-layer transmission**

| TPMI index value | *W* | | | |
|---|---|---|---|---|
| | (Sorted from left to right in increasing order of TPMI index values) | | | |
| 0-2 | $\frac{1}{\sqrt{3}} \left[\begin{matrix}1 \\ 0 \\ 0\end{matrix}\right]$ | $\frac{1}{\sqrt{3}} \left[\begin{matrix}0 \\ 1 \\ 0\end{matrix}\right]$ | $\frac{1}{\sqrt{3}} \left[\begin{matrix}0 \\ 0 \\ 1\end{matrix}\right]$ | - |

Optionally, the second matrix is formed by selecting any two columns from the 3×3 identity matrix in the order of columns in the matrix, multiplying the selected second column by the first phase factor, and then arranging the two columns in their original order, which includes at least one of the following solutions: forming $\left[\begin{matrix}1 & 0 \\ 0 & 1 \\ 0 & 0\end{matrix}\right] , \left[\begin{matrix}1 & 0 \\ 0 & - 1 \\ 0 & 0\end{matrix}\right] , \left[\begin{matrix}1 & 0 \\ 0 & j \\ 0 & 0\end{matrix}\right]$ and $\left[\begin{matrix}1 & 0 \\ 0 & - j \\ 0 & 0\end{matrix}\right]$ by selecting the first column and the second column, multiplying the selected second column by the first phase factor, and then arranging the two columns in their original order; forming $\left[\begin{matrix}1 & 0 \\ 0 & 0 \\ 0 & 1\end{matrix}\right] , \left[\begin{matrix}1 & 0 \\ 0 & 0 \\ 0 & - 1\end{matrix}\right]$, $\left[\begin{matrix}1 & 0 \\ 0 & 0 \\ 0 & j\end{matrix}\right]$ and $\left[\begin{matrix}1 & 0 \\ 0 & 0 \\ 0 & - j\end{matrix}\right]$ by selecting the first column and the third column, multiplying the selected second column by the first phase factor, and then arranging the two columns in their original order; and forming $\left[\begin{matrix}0 & 0 \\ 1 & 0 \\ 0 & 1\end{matrix}\right] , \left[\begin{matrix}0 & 0 \\ 1 & 0 \\ 0 & - 1\end{matrix}\right] , \left[\begin{matrix}0 & 0 \\ 1 & 0 \\ 0 & j\end{matrix}\right]$ and $\left[\begin{matrix}0 & 0 \\ 1 & 0 \\ 0 & - j\end{matrix}\right]$ by selecting the second column and the third column, multiplying the selected second column by the first phase factor, and then arranging the two columns in their original order. Therefore, the second matrix includes at least one of the following: $\left[\begin{matrix}1 & 0 \\ 0 & 1 \\ 0 & 0\end{matrix}\right] , \left[\begin{matrix}1 & 0 \\ 0 & - 1 \\ 0 & 0\end{matrix}\right] , \left[\begin{matrix}1 & 0 \\ 0 & j \\ 0 & 0\end{matrix}\right] , \left[\begin{matrix}1 & 0 \\ 0 & - j \\ 0 & 0\end{matrix}\right] , \left[\begin{matrix}1 & 0 \\ 0 & 0 \\ 0 & 1\end{matrix}\right] , \left[\begin{matrix}1 & 0 \\ 0 & 0 \\ 0 & - 1\end{matrix}\right] , \left[\begin{matrix}1 & 0 \\ 0 & 0 \\ 0 & j\end{matrix}\right] , \left[\begin{matrix}1 & 0 \\ 0 & 0 \\ 0 & - j\end{matrix}\right] , \left[\begin{matrix}0 & 0 \\ 1 & 0 \\ 0 & - 1\end{matrix}\right]$, $\left[\begin{matrix}0 & 0 \\ 1 & 0 \\ 0 & - 1\end{matrix}\right] , \left[\begin{matrix}0 & 0 \\ 1 & 0 \\ 0 & j\end{matrix}\right]$ and $\left[\begin{matrix}0 & 0 \\ 1 & 0 \\ 0 & - j\end{matrix}\right]$. Optionally, the second scaling factor is at least one of $\frac{1}{\sqrt{3}}$, $\frac{1}{\sqrt{2}}$ and $\frac{1}{\sqrt{6}}$. The precoding matrix for two-layer transmission is represented by *W*. A corresponding relationship between the TPMI and the precoding matrix has the following optional solutions.

Optionally, the second scaling factor is $\frac{1}{\sqrt{3}}$, the precoding matrix for two-layer transmission includes at least one of the following: $\frac{1}{\sqrt{3}} \left[\begin{matrix}1 & 0 \\ 0 & 1 \\ 0 & 0\end{matrix}\right] , \frac{1}{\sqrt{3}} \left[\begin{matrix}1 & 0 \\ 0 & - 1 \\ 0 & 0\end{matrix}\right] , \frac{1}{\sqrt{3}} \left[\begin{matrix}1 & 0 \\ 0 & j \\ 0 & 0\end{matrix}\right] , \frac{1}{\sqrt{3}} \left[\begin{matrix}1 & 0 \\ 0 & - j \\ 0 & 0\end{matrix}\right]$, $\frac{1}{\sqrt{3}} \left[\begin{matrix}1 & 0 \\ 0 & 0 \\ 0 & 1\end{matrix}\right] , \frac{1}{\sqrt{3}} \left[\begin{matrix}1 & 0 \\ 0 & 0 \\ 0 & - 1\end{matrix}\right] , \frac{1}{\sqrt{3}} \left[\begin{matrix}1 & 0 \\ 0 & 0 \\ 0 & j\end{matrix}\right] , \frac{1}{\sqrt{3}} \left[\begin{matrix}1 & 0 \\ 0 & 0 \\ 0 & - j\end{matrix}\right] , \frac{1}{\sqrt{3}} \left[\begin{matrix}0 & 0 \\ 1 & 0 \\ 0 & 1\end{matrix}\right] , \frac{1}{\sqrt{3}} \left[\begin{matrix}0 & 0 \\ 1 & 0 \\ 0 & - 1\end{matrix}\right]$, $\frac{1}{\sqrt{3}} \left[\begin{matrix}0 & 0 \\ 1 & 0 \\ 0 & j\end{matrix}\right]$ and $\frac{1}{\sqrt{3}} \left[\begin{matrix}0 & 0 \\ 1 & 0 \\ 0 & - j\end{matrix}\right]$, and a corresponding relationship between the TPMI and the precoding matrix may be as shown in Table 12 below:

**Table 12: Precoding matrix W for two-layer transmission**

| TPMI index value | *W* | | | |
|---|---|---|---|---|
| | (Sorted from left to right in increasing order of TPMI index values) | | | |
| 0-3 | $\frac{1}{\sqrt{3}} \left[\begin{matrix}1 & 0 \\ 0 & 1 \\ 0 & 0\end{matrix}\right]$ | $\frac{1}{\sqrt{3}} \left[\begin{matrix}1 & 0 \\ 0 & - 1 \\ 0 & 0\end{matrix}\right]$ | $\frac{1}{\sqrt{3}} \left[\begin{matrix}1 & 0 \\ 0 & j \\ 0 & 0\end{matrix}\right]$ | $\frac{1}{\sqrt{3}} \left[\begin{matrix}1 & 0 \\ 0 & - j \\ 0 & 0\end{matrix}\right]$ |
| 4-7 | $\frac{1}{\sqrt{3}} \left[\begin{matrix}1 & 0 \\ 0 & 0 \\ 0 & 1\end{matrix}\right]$ | $\frac{1}{\sqrt{3}} \left[\begin{matrix}1 & 0 \\ 0 & 0 \\ 0 & - 1\end{matrix}\right]$ | $\frac{1}{\sqrt{3}} \left[\begin{matrix}1 & 0 \\ 0 & 0 \\ 0 & j\end{matrix}\right]$ | $\frac{1}{\sqrt{3}} \left[\begin{matrix}1 & 0 \\ 0 & 0 \\ 0 & - j\end{matrix}\right]$ |
| 8-11 | $\frac{1}{\sqrt{3}} \left[\begin{matrix}0 & 0 \\ 1 & 0 \\ 0 & 1\end{matrix}\right]$ | $\frac{1}{\sqrt{3}} \left[\begin{matrix}0 & 0 \\ 1 & 0 \\ 0 & - 1\end{matrix}\right]$ | $\frac{1}{\sqrt{3}} \left[\begin{matrix}0 & 0 \\ 1 & 0 \\ 0 & j\end{matrix}\right]$ | $\frac{1}{\sqrt{3}} \left[\begin{matrix}0 & 0 \\ 1 & 0 \\ 0 & - j\end{matrix}\right]$ |

Optionally, the second scaling factor is $\frac{1}{\sqrt{6}}$, the precoding matrix for two-layer transmission includes at least one of the following: $\frac{1}{\sqrt{6}} \left[\begin{matrix}1 & 0 \\ 0 & 1 \\ 0 & 0\end{matrix}\right] , \frac{1}{\sqrt{6}} \left[\begin{matrix}1 & 0 \\ 0 & - 1 \\ 0 & 0\end{matrix}\right] , \frac{1}{\sqrt{6}} \left[\begin{matrix}1 & 0 \\ 0 & j \\ 0 & 0\end{matrix}\right] , \frac{1}{\sqrt{6}} \left[\begin{matrix}1 & 0 \\ 0 & - j \\ 0 & 0\end{matrix}\right] , \frac{1}{\sqrt{6}} \left[\begin{matrix}1 & 0 \\ 0 & 0 \\ 0 & 1\end{matrix}\right]$, $\frac{1}{\sqrt{6}} \left[\begin{matrix}1 & 0 \\ 0 & 0 \\ 0 & - 1\end{matrix}\right] , \frac{1}{\sqrt{6}} \left[\begin{matrix}1 & 0 \\ 0 & 0 \\ 0 & j\end{matrix}\right] , \frac{1}{\sqrt{6}} \left[\begin{matrix}1 & 0 \\ 0 & 0 \\ 0 & - j\end{matrix}\right] , \frac{1}{\sqrt{6}} \left[\begin{matrix}0 & 0 \\ 1 & 0 \\ 0 & 1\end{matrix}\right] , \frac{1}{\sqrt{6}} \left[\begin{matrix}0 & 0 \\ 1 & 0 \\ 0 & - 1\end{matrix}\right] , \frac{1}{\sqrt{6}} \left[\begin{matrix}0 & 0 \\ 1 & 0 \\ 0 & j\end{matrix}\right]$ and $\frac{1}{\sqrt{6}} \left[\begin{matrix}0 & 0 \\ 1 & 0 \\ 0 & - j\end{matrix}\right]$ and a corresponding relationship between the TPMI and the precoding matrix may as be shown in Table 13 below:

**Table 13: Precoding matrix W for two-layer transmission**

| TPMI index value | *W* | | | |
|---|---|---|---|---|
| | (Sorted from left to right in increasing order of TPMI index values) | | | |
| 0-3 | $\frac{1}{\sqrt{6}} \left[\begin{matrix}1 & 0 \\ 0 & 1 \\ 0 & 0\end{matrix}\right]$ | $\frac{1}{\sqrt{6}} \left[\begin{matrix}1 & 0 \\ 0 & - 1 \\ 0 & 0\end{matrix}\right]$ | $\frac{1}{\sqrt{6}} \left[\begin{matrix}1 & 0 \\ 0 & j \\ 0 & 0\end{matrix}\right]$ | $\frac{1}{\sqrt{6}} \left[\begin{matrix}1 & 0 \\ 0 & - j \\ 0 & 0\end{matrix}\right]$ |
| 4-7 | $\frac{1}{\sqrt{6}} \left[\begin{matrix}1 & 0 \\ 0 & 0 \\ 0 & 1\end{matrix}\right]$ | $\frac{1}{\sqrt{6}} \left[\begin{matrix}1 & 0 \\ 0 & 0 \\ 0 & - 1\end{matrix}\right]$ | $\frac{1}{\sqrt{6}} \left[\begin{matrix}1 & 0 \\ 0 & 0 \\ 0 & j\end{matrix}\right]$ | $\frac{1}{\sqrt{6}} \left[\begin{matrix}1 & 0 \\ 0 & 0 \\ 0 & - j\end{matrix}\right]$ |
| 8-11 | $\frac{1}{\sqrt{6}} \left[\begin{matrix}0 & 0 \\ 1 & 0 \\ 0 & 1\end{matrix}\right]$ | $\frac{1}{\sqrt{6}} \left[\begin{matrix}0 & 0 \\ 1 & 0 \\ 0 & - 1\end{matrix}\right]$ | $\frac{1}{\sqrt{6}} \left[\begin{matrix}0 & 0 \\ 1 & 0 \\ 0 & j\end{matrix}\right]$ | $\frac{1}{\sqrt{6}} \left[\begin{matrix}0 & 0 \\ 1 & 0 \\ 0 & - j\end{matrix}\right]$ |

Optionally, the second scaling factor is $\frac{1}{\sqrt{2}}$, the precoding matrix for two-layer transmission includes at least one of the following: $\frac{1}{\sqrt{2}} \left[\begin{matrix}1 & 0 \\ 0 & 1 \\ 0 & 0\end{matrix}\right] , \frac{1}{\sqrt{2}} \left[\begin{matrix}1 & 0 \\ 0 & - 1 \\ 0 & 0\end{matrix}\right] , \frac{1}{\sqrt{2}} \left[\begin{matrix}1 & 0 \\ 0 & j \\ 0 & 0\end{matrix}\right] , \frac{1}{\sqrt{2}} \left[\begin{matrix}1 & 0 \\ 0 & - j \\ 0 & 0\end{matrix}\right] , \frac{1}{\sqrt{2}} \left[\begin{matrix}1 & 0 \\ 0 & 0 \\ 0 & 1\end{matrix}\right]$, $\frac{1}{\sqrt{2}} \left[\begin{matrix}1 & 0 \\ 0 & 0 \\ 0 & - 1\end{matrix}\right] , \frac{1}{\sqrt{2}} \left[\begin{matrix}1 & 0 \\ 0 & 0 \\ 0 & j\end{matrix}\right] , \frac{1}{\sqrt{2}} \left[\begin{matrix}1 & 0 \\ 0 & 0 \\ 0 & - j\end{matrix}\right] , \frac{1}{\sqrt{2}} \left[\begin{matrix}0 & 0 \\ 1 & 0 \\ 0 & 1\end{matrix}\right] , \frac{1}{\sqrt{2}} \left[\begin{matrix}0 & 0 \\ 1 & 0 \\ 0 & - 1\end{matrix}\right]$ and $\frac{1}{\sqrt{2}} \left[\begin{matrix}0 & 0 \\ 1 & 0 \\ 0 & j\end{matrix}\right]$ and $\frac{1}{\sqrt{2}} \left[\begin{matrix}0 & 0 \\ 1 & 0 \\ 0 & - j\end{matrix}\right]$.

Optionally, the third matrix is formed by selecting three columns from the 3×3 identity matrix in the order of columns in the matrix, multiplying the second column by the first phase factor, multiplying the third column by the second phase factor, and then arranging the three columns in their original order. According to values of the first phase factor and the second phase factor, at least one of the following third matrices is formed: $\left[\begin{matrix}1 & 0 & 0 \\ 0 & 1 & 0 \\ 0 & 0 & 1\end{matrix}\right] , \left[\begin{matrix}1 & 0 & 0 \\ 0 & - 1 & 0 \\ 0 & 0 & j\end{matrix}\right] , \left[\begin{matrix}1 & 0 & 0 \\ 0 & j & 0 \\ 0 & 0 & - 1\end{matrix}\right]$, $\left[\begin{matrix}1 & 0 & 0 \\ 0 & - 1 & 0 \\ 0 & 0 & - j\end{matrix}\right] , \left[\begin{matrix}1 & 0 & 0 \\ 0 & - j & 0 \\ 0 & 0 & - 1\end{matrix}\right] , \left[\begin{matrix}1 & 0 & 0 \\ 0 & - j & 0 \\ 0 & 0 & j\end{matrix}\right]$ and $\left[\begin{matrix}1 & 0 & 0 \\ 0 & j & 0 \\ 0 & 0 & - j\end{matrix}\right]$. Therefore, the third matrix includes at least one of the following: $\left[\begin{matrix}1 & 0 & 0 \\ 0 & 1 & 0 \\ 0 & 0 & 1\end{matrix}\right] , \left[\begin{matrix}1 & 0 & 0 \\ 0 & - 1 & 0 \\ 0 & 0 & j\end{matrix}\right] , \left[\begin{matrix}1 & 0 & 0 \\ 0 & j & 0 \\ 0 & 0 & - 1\end{matrix}\right] , \left[\begin{matrix}1 & 0 & 0 \\ 0 & - 1 & 0 \\ 0 & 0 & - j\end{matrix}\right]$, $\left[\begin{matrix}1 & 0 & 0 \\ 0 & - j & 0 \\ 0 & 0 & - 1\end{matrix}\right] , \left[\begin{matrix}1 & 0 & 0 \\ 0 & - j & 0 \\ 0 & 0 & j\end{matrix}\right]$ and $\left[\begin{matrix}1 & 0 & 0 \\ 0 & j & 0 \\ 0 & 0 & - j\end{matrix}\right]$. Optionally, the third scaling factor is $\frac{1}{\sqrt{3}}$ or $\frac{1}{3}$. The precoding matrix for three-layer transmission is represented by *W*. A corresponding relationship between the TPMI and the precoding matrix has the following optional solutions.

Optionally, the third scaling factor is $\frac{1}{\sqrt{3}}$, the precoding matrix for three-layer transmission includes at least one of the following: $\frac{1}{\sqrt{3}} \left[\begin{matrix}1 & 0 & 0 \\ 0 & 1 & 0 \\ 0 & 0 & 1\end{matrix}\right] , \frac{1}{\sqrt{3}} \left[\begin{matrix}1 & 0 & 0 \\ 0 & - 1 & 0 \\ 0 & 0 & j\end{matrix}\right] , \frac{1}{\sqrt{3}} \left[\begin{matrix}1 & 0 & 0 \\ 0 & j & 0 \\ 0 & 0 & - 1\end{matrix}\right]$, $\frac{1}{\sqrt{3}} \left[\begin{matrix}1 & 0 & 0 \\ 0 & - 1 & 0 \\ 0 & 0 & - j\end{matrix}\right] , \frac{1}{\sqrt{3}} \left[\begin{matrix}1 & 0 & 0 \\ 0 & - j & 0 \\ 0 & 0 & - 1\end{matrix}\right] , \frac{1}{\sqrt{3}} \left[\begin{matrix}1 & 0 & 0 \\ 0 & - j & 0 \\ 0 & 0 & j\end{matrix}\right]$ and $\frac{1}{\sqrt{3}} \left[\begin{matrix}1 & 0 & 0 \\ 0 & j & 0 \\ 0 & 0 & - j\end{matrix}\right]$, and a corresponding relationship between the TPMI and the precoding matrix may be as shown in Table 14 below:

**Table 14: Precoding matrix W for three-layer transmission**

| TPMI index value | *W* | | | |
|---|---|---|---|---|
| | (Sorted from left to right in increasing order of TPMI index values) | | | |
| 0-3 | $\frac{1}{\sqrt{3}} \left[\begin{matrix}1 & 0 & 0 \\ 0 & 1 & 0 \\ 0 & 0 & 1\end{matrix}\right]$ | $\frac{1}{\sqrt{3}} \left[\begin{matrix}1 & 0 & 0 \\ 0 & - 1 & 0 \\ 0 & 0 & j\end{matrix}\right]$ | $\frac{1}{\sqrt{3}} \left[\begin{matrix}1 & 0 & 0 \\ 0 & j & 0 \\ 0 & 0 & - 1\end{matrix}\right]$ | $\frac{1}{\sqrt{3}} \left[\begin{matrix}1 & 0 & 0 \\ 0 & - 1 & 0 \\ 0 & 0 & - j\end{matrix}\right]$ |
| 4-6 | $\frac{1}{\sqrt{3}} \left[\begin{matrix}1 & 0 & 0 \\ 0 & - j & 0 \\ 0 & 0 & - 1\end{matrix}\right]$ | $\frac{1}{\sqrt{3}} \left[\begin{matrix}1 & 0 & 0 \\ 0 & - j & 0 \\ 0 & 0 & j\end{matrix}\right]$ | $\frac{1}{\sqrt{3}} \left[\begin{matrix}1 & 0 & 0 \\ 0 & j & 0 \\ 0 & 0 & - j\end{matrix}\right]$ | - |

Optionally, the third scaling factor is $\frac{1}{3}$, the precoding matrix *W* for three-layer transmission includes at least one of the following: $\frac{1}{3} \left[\begin{matrix}1 & 0 & 0 \\ 0 & 1 & 0 \\ 0 & 0 & 1\end{matrix}\right] , \frac{1}{3} \left[\begin{matrix}1 & 0 & 0 \\ 0 & - 1 & 0 \\ 0 & 0 & j\end{matrix}\right] , \frac{1}{3} \left[\begin{matrix}1 & 0 & 0 \\ 0 & j & 0 \\ 0 & 0 & - 1\end{matrix}\right]$, $\frac{1}{3} \left[\begin{matrix}1 & 0 & 0 \\ 0 & - 1 & 0 \\ 0 & 0 & - j\end{matrix}\right] , \frac{1}{3} \left[\begin{matrix}1 & 0 & 0 \\ 0 & - j & 0 \\ 0 & 0 & - 1\end{matrix}\right] , \frac{1}{3} \left[\begin{matrix}1 & 0 & 0 \\ 0 & - j & 0 \\ 0 & 0 & j\end{matrix}\right]$ and $\frac{1}{3} \left[\begin{matrix}1 & 0 & 0 \\ 0 & j & 0 \\ 0 & 0 & - j\end{matrix}\right]$, and a corresponding relationship between the TPMI and the precoding matrix may be as shown in Table 15 below:

**Table 15: Precoding matrix W for three-layer transmission**

| TPMI index value | *W* | | | |
|---|---|---|---|---|
| | (Sorted from left to right in increasing order of TPMI index values) | | | |
| 0-3 | $\frac{1}{3} \left[\begin{matrix}1 & 0 & 0 \\ 0 & 1 & 0 \\ 0 & 0 & 1\end{matrix}\right]$ | $\frac{1}{3} \left[\begin{matrix}1 & 0 & 0 \\ 0 & - 1 & 0 \\ 0 & 0 & j\end{matrix}\right]$ | $\frac{1}{3} \left[\begin{matrix}1 & 0 & 0 \\ 0 & j & 0 \\ 0 & 0 & - 1\end{matrix}\right]$ | $\frac{1}{3} \left[\begin{matrix}1 & 0 & 0 \\ 0 & - 1 & 0 \\ 0 & 0 & - j\end{matrix}\right]$ |
| 4-6 | $\frac{1}{3} \left[\begin{matrix}1 & 0 & 0 \\ 0 & - j & 0 \\ 0 & 0 & - 1\end{matrix}\right]$ | $\frac{1}{3} \left[\begin{matrix}1 & 0 & 0 \\ 0 & - j & 0 \\ 0 & 0 & j\end{matrix}\right]$ | $\frac{1}{3} \left[\begin{matrix}1 & 0 & 0 \\ 0 & j & 0 \\ 0 & 0 & - j\end{matrix}\right]$ | - |

Optionally, the precoding matrix for single-layer transmission, the precoding matrix for two-layer transmission and the precoding matrix for three-layer transmission are applicable to a scenario in which transform precoding is enabled or disabled.

By means of the technical solution in this embodiment, the terminal device selects or determines the codebook for at least three antenna ports based on the downlink information, and then performs PUSCH transmission based on the selected or determined codebook for at least three antenna ports, to support the uplink transmission based on the at least three antenna ports, thereby increasing the uplink throughput, improving the uplink coverage and/or reducing the terminal device costs.

### Third embodiment

The third embodiment of the present application proposes a processing method, which is explained mainly for a method for a terminal device to determine a TPMI and the number of layers of a precoding matrix based on a value of a precoding information and number of layers field.

Optionally, the terminal device selects or determines a codebook for at least three antenna ports based on downlink information, and selects or determines a precoding matrix from the codebook for at least three antenna ports, for PUSCH transmission.

Optionally, the terminal device determines the TPMI and the number of layers of the precoding matrix based on the precoding information and number of layers field.

Optionally, the precoding information and number of layers field is used to indicate the TPMI and the number of layers.

Optionally, the terminal device determines the TPMI and the number of layers of the precoding matrix based on a mapping between the precoding information and number of layers field and the TPMI and the number of layers.

Optionally, the mapping between the precoding information and number of layers field and the TPMI and the number of layers is determined based on at least one of a maximum rank parameter, a transform precoding parameter and a codebook subset parameter.

Optionally, the terminal device determines the TPMI and the number of layers of the precoding matrix based on the value of the precoding information and number of layers field. There is an optional solution for the mapping between the precoding information and number of layers field and the TPMI and the number of layers:
optionally, the mapping between the precoding information and number of layers field and the TPMI and the number of layers is determined based on at least one of the maximum rank parameter, the transform precoding parameter and the codebook subset parameter.

### First case

Optionally, when a value of the maximum rank parameter is 3, the precoding information and number of layers field is [log₂(X+Y+Z)] bits.

Optionally, the value of the precoding information and number of layers field ranges from 0 to (X-1), the corresponding number of layers is 1, and the TPMI value ranges from A to (A+X-1), where A and X are integers.

Optionally, the value of the precoding information and number of layers field ranges from X to (X+Y-1), the corresponding number of layers is 2, and the TPMI value ranges from B to (B+Y-1), where B and Y are integers.

Optionally, the value of the precoding information and number of layers field ranges from (X+Y) to (X+Y+Z-1), the corresponding number of layers is 3, and the TPMI value ranges from C to (C+Z-1), where C and Z are integers.

Optionally, the mapping between the precoding information and number of layers field and the TPMI and the number of layers based on three antenna ports may be as shown in Table 16.

**Table 16: Mapping between precoding information and number of layers field and TPMI and number of layers based on three antenna ports, when the value of maximum rank parameter is 3**

| Map the precoding information and number of layers field to an index value | | Values of the TPMI and the number of layers | |
|---|---|---|---|
| | 0 | | 1 layer: TPMI=A |
| | ... | | ... |
| | X-1 | | 1 layer: TPMI=A+X-1 |
| | X | | 2 layers: TPMI=B |
| | ... | | ... |
| | X+Y-1 | | 2 layers: TPMI=B+Y-1 |
| | X+Y | | 3 layers: TPMI=C |
| | ... | | ... |
| | X+Y+Z-1 | | 3 layers: TPMI=C+Z-1 |

### Second case

Optionally, when the maximum rank parameter is 2, the precoding information and number of layers field is [log₂(X+Y)] bits.

Optionally, the value of the precoding information and number of layers field ranges from 0 to (X-1), the corresponding number of layers is 1, and the TPMI value ranges from A to (A+X-1), where A and X are integers.

Optionally, the value of the precoding information and number of layers field ranges from X to (X+Y-1), the corresponding number of layers is 2, and the TPMI value ranges from B to (B+Y-1), where B and Y are integers.

Optionally, the mapping between the precoding information and number of layers field and the TPMI and the number of layers based on three antenna ports may be as shown in Table 17.

**Table 17: Mapping between precoding information and number of layers field and TPMI and number of layers based on three antenna ports, when the value of maximum rank parameter is 2**

| Map the precoding information and number of layers field to an index value | | Values of the TPMI and the number of layers | |
|---|---|---|---|
| | 0 | | 1 layer: TPMI=A |
| | ... | | ... |
| | X-1 | | 1 layer: TPMI=A+X-1 |
| | X | | 2 layers: TPMI=B |
| | ... | | ... |
| | X+Y-1 | | 2 layers: TPMI=B+Y-1 |

### Third case

Optionally, when the value of the maximum rank parameter is 1, the precoding information and number of layers field is [log₂(X)] bits.

Optionally, the value of the precoding information and number of layers field ranges from 0 to (X-1), the corresponding number of layers is 1, and the TPMI value ranges from A to (A+X-1), where A and X are integers.

Optionally, the mapping between the precoding information and number of layers field and the TPMI and the number of layers based on three antenna ports may be as shown in Table 18.

**Table 18: Mapping between precoding information and number of layers field and TPMI and number of layers based on three antenna ports, when the value of maximum rank parameter is 1**

| Map the precoding information and number of layers field to an index value | | Values of the TPMI and the number of layers | |
|---|---|---|---|
| | 0 | | 1 layer: TPMI=A |
| | ... | | ... |
| | X-1 | | 1 layer: TPMI=A+X-1 |

Optionally, the mapping between the precoding information and number of layers field and the TPMI and the number of layers is applicable to a scenario in which transform precoding is enabled or disabled.

Optionally, the scenario in which transform precoding is enabled or disabled is determined based on the transform precoding parameter, the value of which includes "Enable" or "Disable".

Optionally, the maximum rank parameter is used to indicate a maximum transmission rank for PUSCH transmission using three antenna ports.

Optionally, the maximum rank parameter includes a maximum rank (maxRank) parameter or a maximum rank for three antenna ports (maxRank-n3) parameter.

Optionally, a maximum value of the maximum rank parameter or the maximum rank for three antenna ports parameter is 3.

Optionally, the value of the maximum rank parameter or the maximum rank for three antenna ports parameter includes at least one of the following: 1, 2 and 3.

Optionally, the maximum rank for three antenna ports (maxRank-n3) parameter is added in a PUSCH configuration (PUSCH-Config).

Optionally, the maximum rank for three antenna ports (maxRank-n3) parameter is added in a configured grant configuration (ConfiguredGrantConfig).

Optionally, a value of the codebook subset parameter (codebookSubset) is noncoherent (nonCoherent).

Optionally, determining the mapping between the precoding information and number of layers field and the TPMI and the number of layers based on at least one of the maximum rank parameter, the transform precoding parameter and the codebook subset parameter may include at least one of a first solution, a second solution and a third solution as follows.

### First solution

The first solution may include at least one of a first case, a second case, and a third case as follows.

### First case

Optionally, when the value of the maximum rank parameter is 3, the precoding information and number of layers field is 3 bits.

Optionally, the value of the precoding information and number of layers field ranges from 0 to 2, the corresponding number of layers is 1, and the TPMI value ranges from 0 to 2.

Optionally, the value of the precoding information and number of layers field ranges from 3 to 5, the corresponding number of layers is 2, and the TPMI value ranges from 0 to 2.

Optionally, the value of the precoding information and number of layers field is 6, the corresponding number of layers is 3, and the TPMI value is 0.

Optionally, the mapping between the precoding information and number of layers field and the TPMI and the number of layers based on three antenna ports may be as shown in Table 19.

**Table 19: Mapping between precoding information and number of layers field and TPMI and number of layers based on three antenna ports, when the value of maximum rank parameter is 3**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | 2 layers: TPMI=0 |
| | 4 | | 2 layers: TPMI=1 |
| | 5 | | 2 layers: TPMI=2 |
| | 6 | | 3 layers: TPMI=0 |
| | 7 | | reserved |

### Second case

Optionally, when the value of the maximum rank parameter is 2, the precoding information and number of layers field is 3 bits.

Optionally, the value of the precoding information and number of layers field ranges from 0 to 2, the corresponding number of layers is 1, and the TPMI value ranges from 0 to 2.

Optionally, the value of the precoding information and number of layers field ranges from 3 to 5, the corresponding number of layers is 2, and the TPMI value ranges from 0 to 2.

Optionally, the mapping between the precoding information and number of layers field and the TPMI and the number of layers based on three antenna ports may be as shown in Table 20.

**Table 20: Mapping between precoding information and number of layers field and TPMI and number of layers based on three antenna ports, when the value of maximum rank parameter is 2**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | 2 layers: TPMI=0 |
| | 4 | | 2 layers: TPMI=1 |
| | 5 | | 2 layers: TPMI=2 |
| | 6-7 | | reserved |

### Third case

Optionally, when the value of the maximum rank parameter is 1, the precoding information and number of layers field is 2 bits.

Optionally, the value of the precoding information and number of layers field ranges from 0 to 2, the corresponding number of layers is 1, and the TPMI value ranges from 0 to 2.

Optionally, the mapping between the precoding information and number of layers field and the TPMI and the number of layers based on three antenna ports may be as shown in Table 21.

**Table 21: Mapping between precoding information and number of layers field and TPMI and number of layers based on three antenna ports, when the value of maximum rank parameter is 1**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | reserved |

Optionally, the mapping between the precoding information and number of layers field and the TPMI and the number of layers is applicable to the scenario in which transform precoding is enabled or disabled.

Optionally, the scenario in which transform precoding is enabled or disabled is determined based on the transform precoding parameter, the value of which includes "Enable" or "Disable".

Optionally, the maximum rank parameter is used to indicate the maximum transmission rank for PUSCH transmission using three antenna ports.

Optionally, the maximum rank parameter includes the maximum rank (maxRank) parameter or the maximum rank for three antenna ports (maxRank-n3) parameter.

Optionally, the maximum value of the maximum rank parameter or the maximum rank for three antenna ports parameter is 3. Optionally, the value of the maximum rank parameter or the maximum rank for three antenna ports parameter includes at least one of the following: 1, 2 and 3.

Optionally, the maximum rank for three antenna ports (maxRank-n3) parameter is added in the PUSCH configuration (PUSCH-Config).

Optionally, the maximum rank for three antenna ports (maxRank-n3) parameter is added in the configured grant configuration (ConfiguredGrantConfig).

Optionally, the value of the codebook subset parameter (codebookSubset) is noncoherent (nonCoherent).

### Second solution

The second solution may include at least one of a first case, a second case, and a third case as follows.

### First case

Optionally, when the value of the maximum rank parameter is 3, the precoding information and number of layers field is 4 bits.

Optionally, the value of the precoding information and number of layers field ranges from 0 to 2, the corresponding number of layers is 1, and the TPMI value ranges from 0 to 2.

Optionally, the value of the precoding information and number of layers field ranges from 3 to 8, the corresponding number of layers is 2, and the TPMI value ranges from 0 to 5.

Optionally, the value of the precoding information and number of layers field ranges from 9 to 14, the corresponding number of layers is 3, and the TPMI value ranges from 0 to 5.

Optionally, the mapping between the precoding information and number of layers field and the TPMI and the number of layers based on three antenna ports may be as shown in Table 22.

**Table 22: Mapping between precoding information and number of layers field and TPMI and number of layers based on three antenna ports, when the value of maximum rank parameter is 3**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | 2 layers: TPMI=0 |
| | 4 | | 2 layers: TPMI=1 |
| | ... | | ... |
| | 8 | | 2 layers: TPMI=5 |
| | 9 | | 3 layers: TPMI=0 |
| | 10 | | 3 layers: TPMI=1 |
| | ... | | ... |
| | 14 | | 3 layers: TPMI=5 |
| | 15 | | reserved |

### Second case

Optionally, when the value of the maximum rank parameter is 2, the precoding information and number of layers field is 4 bits.

Optionally, the value of the precoding information and number of layers field ranges from 0 to 2, the corresponding number of layers is 1, and the TPMI value ranges from 0 to 2.

Optionally, the value of the precoding information and number of layers field ranges from 3 to 8, the corresponding number of layers is 2, and the TPMI value ranges from 0 to 5.

Optionally, the mapping between the precoding information and number of layers field and the TPMI and the number of layers based on three antenna ports may be as shown in Table 23.

**Table 23: Mapping between precoding information and number of layers field and TPMI and number of layers based on three antenna ports, when the value of maximum rank parameter is 2**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | 2 layers: TPMI=0 |
| | 4 | | 2 layers: TPMI=1 |
| | ... | | ... |
| | 8 | | 2 layers: TPMI=5 |
| | 9-15 | | reserved |

### Third case

Optionally, when the maximum rank parameter is 1, the precoding information and number of layers field is 2 bits.

Optionally, the value of the precoding information and number of layers field ranges from 0 to 2, the corresponding number of layers is 1, and the TPMI value ranges from 0 to 2.

Optionally, the mapping between the precoding information and number of layers field and the TPMI and the number of layers based on three antenna ports may be as shown in Table 24.

**Table 24: Mapping between precoding information and number of layers field and TPMI and number of layers based on three antenna ports, when the value of maximum rank parameter is 1**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | reserved |

Optionally, the mapping between the precoding information and number of layers field and the TPMI and the number of layers is applicable to the scenario in which transform precoding is enabled or disabled.

Optionally, the scenario in which transform precoding is enabled or disabled is determined based on the transform precoding parameter, the value of which includes "Enable" or "Disable".

Optionally, the maximum rank parameter is used to indicate the maximum transmission rank for PUSCH transmission using three antenna ports. Optionally, the maximum rank parameter includes the maximum rank (maxRank) parameter or the maximum rank for three antenna ports (maxRank-n3) parameter.

Optionally, the maximum value of the maximum rank parameter or the maximum rank for three antenna ports parameter is 3. Optionally, the value of the maximum rank parameter or the maximum rank for three antenna ports parameter includes at least one of the following: 1, 2 and 3.

Optionally, the maximum rank for three antenna ports (maxRank-n3) parameter is added in the PUSCH configuration (PUSCH-Config).

Optionally, the maximum rank for three antenna ports (maxRank-n3) parameter is added in the configured grant configuration (ConfiguredGrantConfig).

Optionally, the value of the codebook subset parameter (codebookSubset) is noncoherent (nonCoherent).

### Third solution

The third solution may include at least one of a first case, a second case, and a third case as follows.

### First case

Optionally, when the value of the maximum rank parameter is 3, the precoding information and number of layers field is 5 bits.

Optionally, the value of the precoding information and number of layers field ranges from 0 to 2, the corresponding number of layers is 1, and the TPMI value ranges from 0 to 2.

Optionally, the value of the precoding information and number of layers field ranges from 3 to 14, the corresponding number of layers is 2, and the TPMI value ranges from 0 to 11.

Optionally, the value of the precoding information and number of layers field ranges from 15 to 21, the corresponding number of layers is 3, and the TPMI value ranges from 0 to 6.

Optionally, the mapping between the precoding information and number of layers field and the TPMI and the number of layers based on three antenna ports may be as shown in Table 25.

**Table 25: Mapping between precoding information and number of layers field and TPMI and number of layers based on three antenna ports, when the value of maximum rank parameter is 3**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | 2 layers: TPMI=0 |
| | 4 | | 2 layers: TPMI=1 |
| | ... | | ... |
| | 14 | | 2 layers: TPMI=11 |
| | 15 | | 3 layers: TPMI=0 |
| | 10 | | 3 layers: TPMI=1 |
| | ... | | ... |
| | 21 | | 3 layers: TPMI=6 |
| | 22-31 | | reserved |

### Second case

Optionally, when the value of the maximum rank parameter is 2, the precoding information and number of layers field is 4 bits.

The value of the precoding information and number of layers field ranges from 0 to 2, the corresponding number of layers is 1, and the TPMI value ranges from 0 to 2.

The value of the precoding information and number of layers field ranges from 3 to 14, the corresponding number of layers is 2, and the TPMI value ranges from 0 to 11.

Optionally, the mapping between the precoding information and number of layers field and the TPMI and the number of layers based on three antenna ports may be as shown in Table 26.

**Table 26: Mapping between precoding information and number of layers field and TPMI and number of layers based on three antenna ports, when the value of maximum rank parameter is 2**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | 2 layers: TPMI=0 |
| | 4 | | 2 layers: TPMI=1 |
| | ... | | ... |
| | 14 | | 2 layers: TPMI=11 |
| | 15 | | reserved |

### Third case

Optionally, when the value of the maximum rank parameter is 1, the precoding information and number of layers field is 2 bits.

Optionally, the value of the precoding information and number of layers field ranges from 0 to 2, the corresponding number of layers is 1, and the TPMI value ranges from 0 to 2.

Optionally, the mapping between the precoding information and number of layers field and the TPMI and the number of layers based on three antenna ports may be as shown in Table 27.

**Table 27: Mapping between precoding information and number of layers field and TPMI and the number of layers based on three antenna ports, when the value of maximum rank parameter is 1.**

| Map the precoding information and number of layers field to an index value | | Values of the TPMI and the number of layers | |
|---|---|---|---|
| | 0 | | 1 layer: TPMI=0 |
| | 1 | | 1 layer: TPMI=1 |
| | 2 | | 1 layer: TPMI=2 |
| | 3 | | reserved |

Optionally, the mapping between the precoding information and number of layers field and the TPMI and the number of layers is applicable to the scenario in which the transform precoding is enabled or disabled. Optionally, the scenario in which the transform precoding is enabled or disabled is determined based on the transform precoding parameter. The value of the transform precoding parameter includes "Enable" or "Disable".

Optionally, the maximum rank parameter is used to indicate the maximum transmission rank for PUSCH transmission using three antenna ports. Optionally, the maximum rank parameter includes the maximum rank (maxRank) parameter or the maximum rank for three antenna ports (maxRank-n3) parameter.

Optionally, the maximum value of the maximum rank parameter or the maximum rank for three antenna ports parameter is 3. Optionally, the value of the maximum rank parameter or the maximum rank for three antenna ports parameter includes at least one of the following: 1, 2 and 3.

Optionally, the maximum rank for three antenna ports (maxRank-n3) parameter is added in the PUSCH configuration (PUSCH-Config).

Optionally, the maximum rank for three antenna ports (maxRank-n3) parameter is added in the configured grant configuration (ConfiguredGrantConfig).

Optionally, the value of the codebook subset parameter (codebookSubset) is noncoherent (nonCoherent).

By means of the technical solution in this embodiment, the terminal device performs uplink transmission based on at least three antenna ports according to the downlink information, and the terminal device determines the TPMI and the number of layers of the precoding matrix based on the value of the precoding information and number of layers field, to support the uplink transmission based on the at least three antenna ports, thereby increasing the uplink throughput, improving the uplink coverage and/or reducing the terminal device costs.

### Fourth Embodiment

Referring to FIG. 7, FIG. 7 is a schematic flowchart of a processing method shown by a fourth embodiment of the present application. The fourth embodiment of the present application proposes a processing method, which is explained mainly for an indication method for uplink transmission based on a codebook for three antenna ports.

The processing method in this embodiment of the present application may be applied to a terminal device (e.g., a mobile phone) and includes the following steps.

S20: the terminal device performs uplink transmission based on at least three antenna ports according to first indication information and/or second indication information.

In existing specifications, the number of ports of an SRS resource is 1/2/4/8 ports, and PUSCH ports for PUSCH transmission are the same as the ports of the SRS resource.

In the process of conceiving and implementing the present application, the inventors have found at least the following problems: since no three antenna ports exist in the SRS resource in the existing specifications, it is impossible to determine or indicate three antenna ports for a PUSCH based on the existing specification where the PUSCH antenna ports are the same as the SRS ports.

Optionally, in this embodiment, the terminal device performs uplink transmission based on at least three antenna ports according to the first indication information and/or the second indication information. Therefore, three antenna ports for PUSCH can be determined or indicated to support uplink transmission based on at least three antenna ports.

Optionally, the first indication information and/or the second indication information is provided by a network device to the terminal device through downlink information.

Optionally, the number of antenna ports is three.

Optionally, the terminal device receives the first indication information and/or the second indication information, selects or determines a codebook for three antenna ports based on the first indication information and/or the second indication information, and selects a precoding matrix from the codebook for three antenna ports, for PUSCH transmission.

Optionally, the first indication information and/or the second indication information indicates to the terminal device to select or determine three SRS ports of the SRS resource.

Optionally, the downlink information includes radio resource control information and/or downlink control information.

Optionally, the first indication information is indicated by the radio resource control information.

Optionally, the second indication information is indicated by the downlink control information.

Optionally, the radio resource control information includes at least one of the following: SRS resources in an SRS configuration, a PUSCH configuration, a configured grant configuration, and the first indication information.

Optionally, the downlink control information includes at least one of the following: a precoding information and number of layers field, an SRS resource indicator field, the second indication information.

Optionally, selecting or determining, by the terminal device, the codebook for three antenna ports based on the first indication information and/or the second indication information includes at least one of the following:
determining a codebook based on the number of selected or determined SRS ports of the SRS resource;
selecting or determining a codebook for three antenna ports based on the first indication information and/or the second indication information.

Optionally, the first indication information and/or the second indication information indicates to the terminal device to select or determine three SRS ports of the SRS resource, for SRS transmission.

Optionally, PUSCH transmission is performed using the same antenna ports as the selected or determined SRS ports of the SRS resource.

Optionally, the first indication information includes an SRS port indication parameter.

Optionally, the second indication information includes an SRS port indicator field.

Optionally, the first indication information includes a selected SRS port number parameter.

Optionally, the second indication information includes a selected SRS port number field.

Optionally, the first indication information includes a three SRS ports of the SRS resource enabling parameter.

Optionally, the second indication information includes a three SRS ports of the SRS resource enabling field.

Optionally, the first indication information includes a codebook type parameter.

Optionally, the second indication information includes a codebook type field.

Optionally, the first indication information being indicated by the radio resource control information, and/or the second indication information being indicated by the downlink control information may adopt the following solutions.

Optionally, the SRS port indication parameter or the selected SRS port number parameter or the three SRS ports of the SRS resource enabling parameter is added in an SRS resource set and/or the SRS resource, to indicate to the terminal device to select or determine three SRS ports of the SRS resource or indicate to the terminal device to select or determine a codebook for three antenna ports and select a precoding matrix from the codebook for three antenna ports for PUSCH transmission.

Optionally, at least one of the SRS port indication parameter or the selected SRS port number parameter or the three SRS ports of the SRS resource enabling parameter is added in the PUSCH configuration and/or the configured grant configuration, to indicate to the terminal device to select or determine three SRS ports of the SRS resource or indicate to the terminal device to select or determine a codebook for three antenna ports and select a precoding matrix from the codebook for three antenna ports for PUSCH transmission.

Optionally, the codebook type field is added in the downlink control information, where the codebook type field is set enabled, the value of the codebook type field is 1, or the codebook type field is set as a codebook for three antenna ports; and/or, the SRS port indicator field or the selected SRS port number field or the three SRS ports of the SRS resource enabling field are added in the downlink control information, to indicate to the terminal device to select or determine three SRS ports of the SRS resource or indicate to the terminal device to select or determine a codebook for three antenna port and select a precoding matrix from the codebook for three antenna ports for PUSCH transmission.

Optionally, the codebook type parameter is added in the PUSCH configuration and/or the configured grant configuration, where the codebook type parameter is configured, the codebook type parameter is set enabled, or the codebook type parameter is set as a codebook for three antenna ports, to indicate to the terminal device to select or determine three SRS ports of the SRS resource or indicate to the terminal device to select or determine a codebook for three antenna ports and select a precoding matrix from the codebook for three antenna ports for PUSCH transmission.

Optionally, the number of antenna ports used in the codebook or the number of antenna ports in the codebook is the same as the number of the selected or determined SRS ports of the SRS resource, and the terminal device determines the codebook based on the number of the selected or determined SRS ports of the SRS resource. Specifically, the number of the selected or determined SRS ports of the SRS resource is 3, which indicates that the terminal device selects or determines a codebook for three antenna ports, and select a precoding matrix from the codebook for three antenna ports for PUSCH transmission.

Optionally, the SRS port indication parameter or the selected SRS port number parameter or the three SRS ports of the SRS resource enabling parameter is added in an SRS resource set and/or the SRS resource, to indicate to the terminal device to select or determine three SRS ports of the SRS resource, and the terminal device performs SRS transmission based on three selected or determined SRS ports of the SRS resource.

Optionally, the detailed design method for parameters included in the first indication information and/or the second indication information may be found in the fifth embodiment, which will not be repeated here.

Optionally, selecting or determining, by the terminal device, the SRS ports of the SRS resource includes at least one of the following:
selecting or determining the first three SRS ports of the SRS resource;
selecting or determining three SRS ports of the SRS resource;
selecting or determining SRS ports of the SRS resource based on the first indication information and/or the second indication information.

Optionally, the number of antenna ports used in the codebook or the number of antenna ports in the codebook for three antenna ports is the same as the number of the selected or determined SRS ports of the SRS resource.

Optionally, the number of the selected or determined SRS ports of the SRS resource is 3.

Optionally, the selected or determined SRS ports of the SRS resource are 1000, 1001, and 1002 sequentially.

Optionally, the selected or determined SRS ports of the SRS resource are 1000, 1001 and 1002 in increasing order of initial antenna port numbers.

Optionally, selecting, by the terminal device, the precoding matrix from the codebook for three antenna ports for PUSCH transmission includes at least one of the following:
determining a TPMI and the number of layers of the precoding matrix based on the precoding information and number of layers field;
performing PUSCH transmission using the same antenna ports as the selected or determined SRS ports of the SRS resource;
performing PUSCH transmission using the same antenna ports as the SRS ports of the SRS resource, based on third indication information.

Optionally, the SRS resource is indicated by the SRS resource indicator field.

Optionally, the third indication information includes a number SRS port for three antenna ports parameter.

Optionally, the codebook for three antenna ports includes: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the first matrix is obtained by selecting any one column from a 3×3 identity matrix.

Optionally, the second matrix is formed by selecting any two columns from a 3×3 identity matrix in an order of columns in the matrix, and arranging the two columns in their original order or swapped order.

Optionally, the second matrix is formed by selecting any two columns from a 3×3 identity matrix in an order of columns in the matrix, multiplying the selected second column by a first phase factor, and then arranging the two columns in their original order.

Optionally, the third matrix is a 3×3 identity matrix.

Optionally, the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped.

Optionally, the third matrix is formed by selecting three columns from a 3×3 identity matrix in an order of columns in the matrix, multiplying the second column by a first phase factor, multiplying the third column by a second phase factor, and then arranging the three columns in their original order.

Optionally, the method further includes at least one of the following:
in the first matrix, one element is a first value, and the remaining elements are a second value;
in the second matrix and/or the third matrix, one element in each column is a first value, and the remaining elements are a second value;
in the second matrix, one element in the first column is a first value, and the remaining elements are a second value; one element in the second column is the first phase factor, and the remaining elements are the second value;
in the third matrix, one element in the first column is a first value, and the remaining elements are a second value; one element in the second column is the first phase factor, and the remaining elements are the second value; one element in the third column is the second phase factor, and the remaining elements are the second value.

Optionally, the first value is 1, and the second value is 0.

Optionally, the first phase factor is at least one of 1, -1*, j,* and *-j,* and the second phase factor is at least one of 1, -1, *j*, and -*j*, where *j* is an imaginary unit.

Optionally, the first scaling factor is $\frac{1}{\sqrt{3}}$ or 1.

Optionally, the second scaling factor is at least one of the following: $\frac{1}{\sqrt{3}} , \frac{1}{\sqrt{2}}$ and $\frac{1}{\sqrt{6}}$.

Optionally, the third scaling factor is $\frac{1}{\sqrt{3}}$ or $\frac{1}{3}$.

By the technical solution in this embodiment, the terminal device performs uplink transmission based on at least three antenna ports according to the first indication information and/or the second indication information. Therefore, three antenna ports for the PUSCH can be determined or indicated to support uplink transmission based on at least three antenna ports, thereby increasing the uplink throughput, improving the unlink coverage and/or reducing the terminal device costs.

### Fifth Embodiment

Referring to FIG. 8, FIG. 8 is a schematic flowchart of a processing method shown by a fifth embodiment of the present application. The fifth embodiment of the present application proposes a processing method, which is explained mainly for a method for determining an SRS port and/or a PUSCH port.

The processing method in this embodiment of the present application may be applied to a terminal device (e.g., a mobile phone) and includes the following steps.

S200: the terminal device selects or determines at least three antenna ports based on the downlink information, for uplink transmission.

Optionally, in this embodiment, the terminal device selects or determines SRS ports of an SRS resource based on the downlink information, and determines at least three antenna ports based on the selected or determined SRS ports of the SRS resource, for PUSCH transmission.

Optionally, the step S200 further includes the following steps:
S2001: the terminal device selects or determines the SRS ports of the SRS resource based on the downlink information;
S2002: the terminal device performs uplink transmission based on the selected or determined SRS ports of the SRS resource.

Optionally, the downlink information is provided by a network device to the terminal device.

Optionally, the downlink information includes radio resource control information and/or downlink control information.

Optionally, the radio resource control information includes at least one of the following: SRS resources in an SRS configuration, a PUSCH configuration, a configured grant configuration, and first indication information.

Optionally, the downlink control information includes at least one of the following: a precoding information and number of layers field, an SRS resource indicator field, second indication information.

Optionally, the number of antenna ports is three.

Optionally, selecting or determining, by the terminal device, the SRS ports of the SRS resource includes at least one of the following:
selecting or determining the first three SRS ports of the SRS resource;
selecting or determining three SRS ports of the SRS resource;
selecting or determining SRS ports of the SRS resource based on the first indication information and/or the second indication information.

Optionally, the first indication information and/or the second indication information indicates to the terminal device to select or determine three SRS ports of the SRS resource, for SRS transmission.

Optionally, the first indication information includes an SRS port indication parameter.

Optionally, the second indication information includes an SRS port indicator field.

Optionally, the first indication information includes a selected SRS port number parameter.

Optionally, the second indication information includes a selected SRS port number field.

Optionally, the first indication information includes a three SRS ports of the SRS resource enabling parameter.

Optionally, the second indication information includes a three SRS ports of the SRS resource enabling field.

Optionally, the first indication information includes a codebook type parameter.

Optionally, the second indication information includes a codebook type field.

Optionally, the terminal device performs PUSCH transmission using the same antenna ports as the selected or determined SRS ports of the SRS resource.

Optionally, the terminal device determines PUSCH ports based on the ports of the SRS resource and performs PUSCH transmission based on the PUSCH ports.

Optionally, selecting or determining, by the terminal device, the SRS ports of the SRS resource based on the downlink information may adopt at least one of the following solutions.

### First solution

Optionally, the terminal device selects or determines the SRS ports of the SRS resource, and performs SRS transmission based on the SRS resource and/or the selected or determined SRS ports of the SRS resource.

Optionally, the number of antenna ports of the SRS resource is 4 or 8, that is: the number of SRS port (nrofSRS-Ports) parameter is 4, or the number of SRS port for eight antenna ports (nrofSRS-Ports-n8) parameter is 8.

Optionally, the number of the selected or determined SRS ports of the SRS resource is 3.

Optionally, the selected or determined SRS ports of the SRS resource include at least one of the following: 1000, 1001, and 1002. Optionally, the following optional solutions are included:
the number of antenna ports of the SRS resource ${N}_{ap}^{SRS}$ is 3, and the antenna ports are ${\left\{{p}_{i}\right\}}_{i = 0}^{{N}_{ap}^{SRS} - 1}$; optionally, pᵢ = 1000+i;
the selected or determined SRS ports of the SRS resource are 1000, 1001, and 1002 sequentially;
the selected or determined SRS ports of the SRS resource are 1000, 1001 and 1002 in increasing order of initial antenna port numbers.

### Second solution

Optionally, the terminal device selects or determines the SRS ports of the SRS resource according to a predefined rule, and performs SRS transmission based on the SRS resource and/or the selected or determined SRS ports of the SRS resource.

Optionally, selecting or determining, by the terminal device, the SRS ports of the SRS resource according to the predefined rule includes at least one of the following:
selecting or determining three predefined SRS ports of the SRS resource;
selecting or determining three SRS ports of the SRS resource;
selecting or determining the first three SRS ports of the SRS resource.

Optionally, the number of antenna ports of the SRS resource is 4 or 8, that is: the number of SRS port (nrofSRS-Ports) parameter is 4, or the number of SRS port for eight antenna ports (nrofSRS-Ports-n8) parameter is 8.

Optionally, the number of the selected or determined SRS ports of the SRS resource is 3.

Optionally, the selected or determined SRS ports of the SRS resource include at least one of the following: 1000, 1001, and 1002. Optionally, the following optional solutions are included:
the number of antenna ports of the SRS resource ${N}_{ap}^{SRS}$ is 3, and the antenna ports are ${\left\{{p}_{i}\right\}}_{i = 1}^{{N}_{ap}^{SRS} - 1}$; optionally, pᵢ = 1000+i;
the selected or determined SRS ports of the SRS resource are 1000, 1001, and 1002 sequentially;
the selected or determined SRS ports of the SRS resource are 1000, 1001 and 1002 in increasing order of initial antenna port numbers.

### Third solution

Optionally, the terminal device receives the first indication information and/or the second indication information, selects or determines the SRS ports of the SRS resource based on the first indication information and/or the second indication information, and performs SRS transmission based on the SRS source and/or the selected or determined SRS ports of the SRS resource.

Optionally, the first indication information and/or the second indication information indicates to the terminal device to select or determine three SRS ports of the SRS resource.

Optionally, the first indication information includes an SRS port indication parameter.

Optionally, the second indication information includes an SRS port indicator field.

Optionally, the first indication information includes a selected SRS port number parameter.

Optionally, the second indication information includes a selected SRS port number field.

Optionally, the first indication information includes a three SRS ports of the SRS resource enabling parameter.

Optionally, the second indication information includes a three SRS ports of the SRS resource enabling field.

Optionally, the first indication information includes a codebook type parameter.

Optionally, the second indication information includes a codebook type field.

Optionally, the first indication information is indicated by radio resource control information.

Optionally, the second indication information is indicated by medium access control control element information.

Optionally, the second indication information is indicated by downlink control information.

Optionally, the number of antenna ports of the SRS resource is 4 or 8, that is: the number of SRS port (nrofSRS-Ports) parameter is 4, or the number of SRS port for eight antenna ports (nrofSRS-Ports-n8) parameter is 8.

The first indication information and/or the second indication information includes at least one of the following cases.

### First case

The first indication information includes the SRS port indication parameter, and/or the second indication information includes the SRS port indicator field.

Optionally, the SRS port indication parameter or the SRS port indicator field includes 4 bits or 8 bits, and the SRS ports of the SRS resource are selected or determined based on the SRS port indication parameter or the SRS port indicator field, for SRS transmission.

Optionally, the first bit (leftmost bit) of the SRS port indication parameter or the SRS port indicator field corresponds to the first SRS port of the SRS resource, the second bit corresponds to the second SRS port of the SRS resource, and so on.

Optionally, if a bit is set to 1, it indicates that the SRS port corresponding to this bit is selected or determined; and/or if a bit is set to 0, it indicates that the SRS port corresponding to this bit is not selected or determined.

Optionally, the SRS port indication parameter or the SRS port indicator field that includes 4 bits corresponds to the SRS resource configured with four SRS ports.

Optionally, the SRS port indication parameter or the SRS port indicator field that includes 8 bits corresponds to the SRS resource configured with eight SRS ports.

Optionally, the number of the selected or determined SRS ports of the SRS resource is 3.

Optionally, a method for configuring the SRS port indication parameter or the SRS port indicator field includes the following optional solutions:
adding the SRS port indication parameter in radio resource control;
adding the SRS port indication parameter in the PUSCH configuration (PUSCH-Config);
adding the SRS port indication parameter in the configured grant configuration (ConfiguredGrantConfig);
adding the SRS port indication parameter in the SRS configuration (SRS-Config);
adding the SRS port indication parameter in an SRS resource set (SRS-ResourceSet);
adding the SRS port indication parameter in the SRS resource (SRS-Resource);
adding the SRS port indicator field in a MAC CE and/or DCI.

### Second case

The first indication information includes the selected SRS port number parameter; and/or, the second indication information includes the selected SRS port number field.

Optionally, the SRS ports of the SRS resource are selected or determined based on the selected SRS port number parameter or the selected SRS port number field, for SRS transmission.

Optionally, the value of the selected SRS port number parameter or the selected SRS port number field includes at least one of the following: 3, 4 and 8.

Optionally, if the value of the selected SRS port number parameter or the selected SRS port number field is 3, three SRS ports of the SRS resource are selected. Optionally, the first three SRS ports of the SRS resource are selected or determined.

Optionally, if the value of the selected SRS port number parameter or the selected SRS port number field is 4, four SRS ports of the SRS resource are selected or determined.

Optionally, if the value of the selected SRS port number parameter or the selected SRS port number field is 8, eight SRS ports of the SRS resource are selected or determined.

Optionally, a method for configuring the selected SRS port number parameter or the selected SRS port number field includes the following optional solutions:
adding the selected SRS port number parameter in radio resource control;
adding the selected SRS port number parameter in the PUSCH configuration (PUSCH-Config);
adding the selected SRS port number parameter in the configured grant configuration (ConfiguredGrantConfig);
adding the selected SRS port number parameter in the SRS configuration (SRS-Config);
adding the selected SRS port number parameter in an SRS resource set (SRS-ResourceSet);
adding the selected SRS port number parameter in the SRS resource (SRS-Resource);
adding the selected SRS port number field in a MAC CE and/or DCI.

### Third case

The first indication information includes the three SRS ports of the SRS resource enabling parameter, and/or the second indication information includes the three SRS ports of the SRS resource enabling field; and at least one of the following items indicates that the terminal device selects or determines the SRS ports of the SRS resource and performs SRS transmission: the three SRS ports of the SRS resource enabling parameter being configured, the three SRS ports of the SRS resource enabling parameter being set to enabled, and the three SRS ports of the SRS resource enabling field being set to enabled.

Optionally, the number of the selected or determined SRS ports of the SRS resource is 3.

Optionally, three predefined SRS ports of the SRS resource are selected or determined.

Optionally, the first three SRS ports of the SRS resource are selected or determined.

Optionally, a method for configuring the three SRS ports of the SRS resource enabling parameter or the three SRS ports of the SRS resource enabling field includes the following optional solutions:
adding the three SRS ports of the SRS resource enabling parameter in radio resource control;
adding the three SRS ports of the SRS resource enabling parameter in the PUSCH configuration (PUSCH-Config);
adding the three SRS ports of the SRS resource enabling parameter in the configured grant configuration (ConfiguredGrantConfig);
adding the three SRS ports of the SRS resource enabling parameter in the SRS configuration (SRS-Config);
adding the three SRS ports of the SRS resource enabling parameter in an SRS resource set (SRS-ResourceSet);
adding the three SRS ports of the SRS resource enabling parameter in the SRS resource (SRS-Resource);
adding the three SRS ports of the SRS resource enabling field in a MAC CE and/or DCI.

### Fourth case

The first indication information includes the codebook type parameter, and/or the second indication information includes the codebook type field; and at least one of the following items indicates that the terminal device selects or determines the SRS ports of the SRS resource and performs SRS transmission: the codebook type parameter being set to enabled, a value of the codebook type parameter being a codebook for three antenna ports, the codebook type field being set to enabled, and a value of the codebook type field being a codebook for three antenna ports.

Optionally, the number of the selected or determined SRS ports of the SRS resource is 3.

Optionally, three predefined SRS ports of the SRS resource are selected or determined.

Optionally, the first three SRS ports of the SRS resource are selected or determined.

Optionally, a method for configuring the codebook type parameter or the codebook type field includes the following optional solutions:
adding the codebook type parameter in radio resource control;
adding the codebook type parameter in the PUSCH configuration (PUSCH-Config);
adding the codebook type parameter in the configured grant configuration (ConfiguredGrantConfig);
adding the codebook type field in a MAC CE and/or DCI.

Optionally, the number of the selected or determined SRS ports of the SRS resource is 3.

Optionally, the selected or determined SRS ports of the SRS resource include at least one of the following: 1000, 1001, and 1002. Optionally, the following optional solutions are included:
the number of antenna ports of the SRS resource ${N}_{ap}^{SRS}$ is 3, and the antenna ports are ${\left\{{p}_{i}\right\}}_{i = 1}^{{N}_{ap}^{SRS} - 1}$; optionally, pᵢ = 1000+i;
the selected or determined SRS ports of the SRS resource are 1000, 1001, and 1002 sequentially;
the selected or determined SRS ports of the SRS resource are 1000, 1001 and 1002 in increasing order of initial antenna port numbers.

Optionally, performing, by the terminal device, uplink transmission based on the selected or determined SRS ports of the SRS resource includes the following solutions.

Optionally, the terminal device performs PUSCH transmission using the same antenna ports as the selected or determined SRS ports of the SRS resource; and optionally, at least one of the following is also included:
the SRS resource is indicated by DCI format 0_1/0_2/0_3 or the configured grant configuration (ConfiguredGrantConfig);
the SRS resource is indicated by the SRS resource indicator field in DCI format 0_1/0_2/0_3 or the SRS resource indicator parameter (srs-ResourceIndicator) in the configured grant configuration (ConfiguredGrantConfig);
a usage parameter (usage) in an SRS resource set (SRS-ResourceSet) corresponding to the SRS resource is not set to noncodebook (nonCodebook), or the usage parameter in the SRS resource set corresponding the SRS resource is set to codebook (codebook);
for PUSCH transmission based on the codebook for three antenna ports, a maximum value of a maximum rank (maxRank) parameter or a maximum rank for three antenna ports (maxRank-n3) parameter is 3; and optionally, the value of the maximum rank parameter or the maximum rank for three antenna ports parameter includes at least one of the following: 1, 2 and 3.

Optionally, the terminal device receives third indication information, the third indication information indicating that the number of the SRS ports of the SRS resource is 3, and the terminal device performs PUSCH transmission using the same antenna ports as the SRS ports of the SRS resource. Optionally, at least one of the following is also included:
the SRS resource is indicated by DCI format 0_1/0_2/0_3 or the configured grant configuration (ConfiguredGrantConfig);
the SRS resource is indicated by the SRS resource indicator field in DCI format 0_1/0_2/0_3 or the SRS resource indicator parameter (srs-ResourceIndicator) in the configured grant configuration (ConfiguredGrantConfig);
a usage parameter (usage) in an SRS resource set (SRS-ResourceSet) corresponding to the SRS resource is not set to noncodebook (nonCodebook), or the usage parameter in the SRS resource set corresponding the SRS resource is set to codebook (codebook);
the third indication information has the following optional solutions:
   the third indication information includes the number of SRS port (nrofSRS-Ports) parameter, and a value of three antenna ports (ports3) is added in the number of SRS port parameter; the number of SRS port parameter being set as three antenna ports indicates that the number of SRS ports of the SRS resource is 3;
   the third indication information includes the number of SRS port for three antenna ports (nrofSRS-Ports-n3) parameter, and at least one of the following items indicates that the number of SRS ports of the SRS resource is 3: the number of SRS port for three antenna ports parameter being configured, the number of SRS port for three antenna ports parameter being set to enabled, and the number of SRS port for three antenna ports parameter being set as three antenna ports.

Optionally, a method for configuring the number of SRS port for three antenna ports parameter includes the following optional solutions:
adding the number of SRS port for three antenna ports parameter in the PUSCH configuration (PUSCH-Config);
adding the number of SRS port for three antenna ports parameter in the configured grant configuration (ConfiguredGrantConfig);
adding the number of SRS port for three antenna ports parameter in the SRS configuration (SRS-Config);
adding the number of SRS port for three antenna ports parameter in the SRS resource (SRS-Resource);
the number of antenna ports of the SRS resource ${N}_{ap}^{SRS}$ is 3, and the antenna ports are ${\left\{{p}_{i}\right\}}_{i = 1}^{{N}_{ap}^{SRS} - 1}$; and optionally, pᵢ = 1000+i;
for PUSCH transmission based on the codebook for three antenna ports, the maximum value of the maximum rank (maxRank) parameter or the maximum rank for three antenna ports (maxRank-n3) parameter is 3; and optionally, the value of the maximum rank parameter or the maximum rank for three antenna ports parameter includes at least one of the following: 1, 2 and 3.

Optionally, performing, by the terminal device, uplink transmission based on the selected or determined SRS ports of the SRS resource further includes the following solutions:
the terminal device performs SRS transmission based on the selected or determined SRS ports of the SRS resource;
the terminal device performs PUSCH transmission using the same antenna ports as the selected or determined SRS ports of the SRS resource;
the terminal device selects or determines at least three antenna ports based on the selected or determined SRS ports of the SRS resource, for PUSCH transmission;
the terminal device selects or determines three antenna ports based on the selected or determined SRS ports of the SRS resource, and then selects or determines the codebook for three antenna ports, to perform PUSCH transmission based on the selected or determined codebook for three antenna ports.

Optionally, a specific implementation solution of selecting or determining, by the terminal device, the codebook for three antenna ports may be found in the above various embodiments, and will not be repeated here.

Optionally, performing, by the terminal device, PUSCH transmission based on the selected or determined codebook for three antenna ports may include: selecting or determining, by the terminal device, a precoding matrix from the selected or determined codebook for three antenna ports, for PUSCH transmission.

Optionally, a specific implementation solution of selecting or determining, by the terminal device, the precoding matrix from the selected or determined codebook for three antenna ports for PUSCH transmission may be found in the above various embodiments, and will not be repeated here.

By means of the technical solution in this embodiment, the terminal device selects or determines at least three antenna ports based on the downlink information for uplink transmission, to support the uplink transmission based on at least three antenna ports, thereby increasing the uplink throughput, improving the uplink coverage and/or reducing the terminal device costs.

### Sixth embodiment

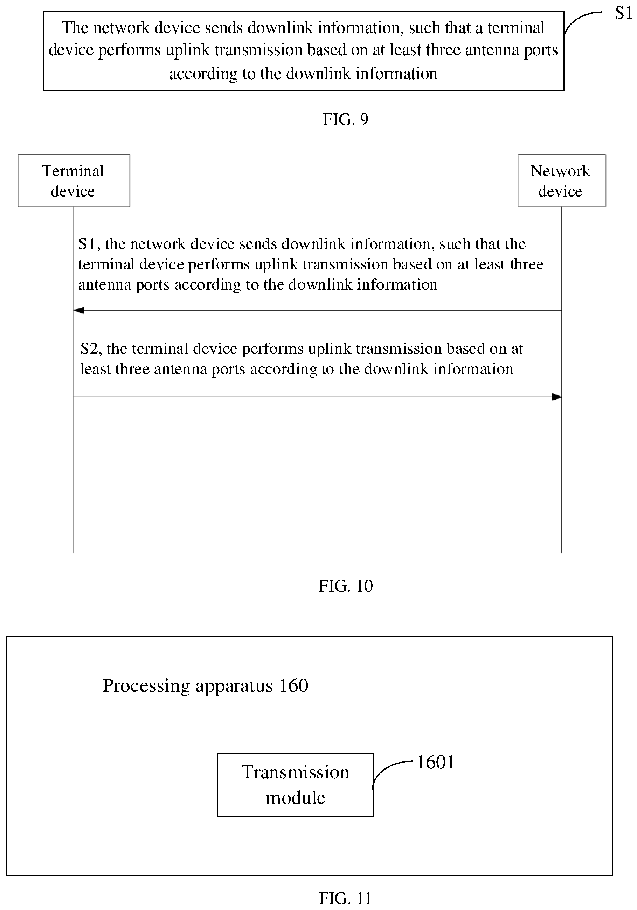

Referring to FIG. 9, FIG. 9 is a schematic flowchart of a processing method shown by a sixth embodiment of the present application. The processing method in the embodiment of the present application may be applied to a network device (e.g., at least one of a base station, a transmission and reception point, and a satellite), and includes the following steps.

S1: the network device sends downlink information, such that a terminal device performs uplink transmission based on at least three antenna ports according to the downlink information.

The solution of this embodiment supports uplink transmission based on at least three antenna ports, thereby increasing the uplink throughput, improving the uplink coverage and/or reducing the terminal device costs.

Optionally, the downlink information is provided by the network device to the terminal device.

Optionally, the downlink information includes radio resource control information and/or downlink control information.

Optionally, the radio resource control information includes at least one of the following: SRS resources in an SRS configuration, a PUSCH configuration, a configured grant configuration, and first indication information.

Optionally, the downlink control information includes at least one of the following: a precoding information and number of layers field (Precoding information and number of layers), an SRS resource indicator field (SRS resource indicator), second indication information.

Optionally, performing, by the terminal device, the uplink transmission based on the at least three antenna ports according to the downlink information includes:
selecting or determining, by the terminal device, a codebook for at least three antenna ports based on the downlink information;
selecting or determining, by the terminal device, a precoding matrix from the codebook for at least three antenna ports, for PUSCH transmission.

Optionally, the number of antenna ports is three, and correspondingly, a codebook for three antenna ports includes: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the first matrix is obtained by selecting any one column from a 3×3 identity matrix.

Optionally, the second matrix is formed by selecting any two columns from a 3×3 identity matrix in an order of columns in the matrix, and arranging the two columns in their original order or swapped order.

Optionally, the second matrix is formed by selecting any two columns from a 3×3 identity matrix in an order of columns in the matrix, multiplying the selected second column by a first phase factor, and then arranging the two columns in their original order.

Optionally, the third matrix is a 3×3 identity matrix.

Optionally, the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped.

Optionally, the third matrix is formed by selecting three columns from a 3×3 identity matrix in an order of columns in the matrix, multiplying the second column by a first phase factor, multiplying the third column by a second phase factor, and then arranging the three columns in their original order.

Optionally, the method further includes at least one of the following:
in the first matrix, one element is a first value and the remaining elements are a second value;
in the second matrix and/or the third matrix, one element in each column is a first value and the remaining elements are a second value;
in the second matrix, one element in the first column is a first value, and the remaining elements are a second value; one element in the second column is the first phase factor, and the remaining elements are the second value;
in the third matrix, one element in the first column is a first value, and the remaining elements are a second value; one element in the second column is the first phase factor, and the remaining elements are the second value; one element in the third column is the second phase factor, and the remaining elements are the second value.

Optionally, the first value is 1, and the second value is 0.

Optionally, the first phase factor is at least one of 1, -1, *j,* and *-j,* and the second phase factor is at least one of 1, -1, *j*, and -*j*, where *j* is an imaginary unit.

Optionally, the first scaling factor is $\frac{1}{\sqrt{3}}$ or 1.

Optionally, the second scaling factor is at least one of the following: $\frac{1}{\sqrt{3}} , \frac{1}{\sqrt{2}}$ and $\frac{1}{\sqrt{6}}$.

Optionally, the third scaling factor is $\frac{1}{\sqrt{3}}$ or $\frac{1}{3}$.

Taking three antenna ports as an example, the overall processing flow involved in this embodiment may include the following steps.

Step 1: designing or constructing a codebook for three antenna ports, and saving the codebook for three antenna ports in the terminal device and/or the network device.

Step 2: the terminal device reports a terminal device capability value to the network device, to indicate that the current terminal device supports three antenna ports.

Step 3: the terminal device receives downlink information sent by the network device, the downlink information including radio resource control information and/or downlink control information.

Step 4: the terminal device sends an SRS based on SRS resources and/or the downlink information.

Step 5: the network device performs uplink channel estimation based on the received SRS and sends the downlink control information. Optionally, the downlink control information includes a precoding information and number of layers field, and an SRS resource indicator field.

Optionally, the precoding information and number of layers field is used to indicate a TPMI and the number of layers, while the SRS resource indicator field is used to indicate an SRS resource.

Step 6: the terminal device selects a precoding matrix from the codebook for three antenna ports to perform precoding processing on a PUSCH precoding, and performs transmission.

It should be noted that the steps contained in the above process may be deleted or added according to an actual situation; and optionally, the order of the steps may be adjusted according to the actual situation, which will not be specifically limited in this embodiment.

Optionally, selecting or determining, by the terminal device, the codebook for three antenna ports based on the downlink information includes at least one of the following:
determining a codebook based on the number of selected or determined SRS ports of the SRS resource;
selecting or determining a codebook for three antenna ports based on the first indication information and/or the second indication information.

Optionally, selecting or determining, by the terminal device, the precoding matrix from the codebook for three antenna ports for PUSCH transmission includes at least one of the following:
determining a TPMI and the number of layers of the precoding matrix based on the precoding information and number of layers field;
performing PUSCH transmission using the same antenna ports as selected or determined SRS ports of the SRS resource;
performing PUSCH transmission using the same antenna ports as SRS ports of the SRS resource, based on third indication information.

Optionally, the SRS resource is indicated by the SRS resource indicator field.

Optionally, the third indication information includes a number SRS port for three antenna ports parameter.

Optionally, selecting or determining, by the terminal device, the SRS ports of the SRS resource includes at least one of the following:
selecting or determining the first three SRS ports of the SRS resource;
selecting or determining, by the terminal device, three SRS ports of the SRS resource;
selecting or determining SRS ports of the SRS resource based on the first indication information and/or the second indication information.

Optionally, the first indication information and/or the second indication information indicates to the terminal device to select or determine three SRS ports of the SRS resource, for SRS transmission.

Optionally, the first indication information includes an SRS port indication parameter.

Optionally, the second indication information includes an SRS port indicator field.

Optionally, the first indication information includes a selected SRS port number parameter.

Optionally, the second indication information includes a selected SRS port number field.

Optionally, the first indication information includes a three SRS ports of the SRS resource enabling parameter.

Optionally, the second indication information includes a three SRS ports of the SRS resource enabling field.

Optionally, the first indication information includes a codebook type parameter.

Optionally, the second indication information includes a codebook type field.

Optionally, the method further includes at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is the same as the number of the selected or determined SRS ports of the SRS resource;
the number of the selected or determined SRS ports of the SRS resource is 3;
the selected or determined SRS ports of the SRS resource are 1000, 1001, and 1002 sequentially;
the selected or determined SRS ports of the SRS resource are 1000, 1001 and 1002 in increasing order of initial antenna port numbers.

Optionally, the method further includes at least one of the following:
adding the SRS port indication parameter in the PUSCH configuration;
adding the SRS port indication parameter in the SRS resource;
adding the SRS port indicator field in the downlink control information;
adding the selected SRS port number parameter in the PUSCH configuration;
adding the selected SRS port number parameter in the SRS resource;
adding the selected SRS port number field in the downlink control information;
adding the three SRS ports of the SRS resource enabling parameter in the PUSCH configuration;
adding the three SRS ports of the SRS resource enabling parameter in the SRS resource;
adding the three SRS ports of the SRS resource enabling field in the downlink control information;
adding the codebook type parameter in the PUSCH configuration;
adding the codebook type parameter in the configured grant configuration;
adding the codebook type field in the downlink control information.

By means of the technical solution in this embodiment, the terminal device performs uplink transmission based on at least three antenna ports according to the downlink information sent by the network device, to support the uplink transmission based on the at least three antenna ports, thereby increasing the uplink throughput, improving the uplink coverage and/or reducing the terminal device costs.

### Seventh Embodiment

Referring to FIG. 10, FIG. 10 is a schematic diagram of an interaction process between a network device and a terminal device in a processing method shown by a seventh embodiment of the present application. The processing method proposed by this embodiment includes the following steps:
S1: the network device sends downlink information, such that the terminal device performs uplink transmission based on at least three antenna ports according to the downlink information;
S2: the terminal device performs uplink transmission based on at least three antenna ports according to the downlink information.

The solution of this embodiment supports the uplink transmission based on at least three antenna ports, thereby increasing the uplink throughput, improving the uplink coverage and/or reducing the terminal device costs.

Optionally, the downlink information is provided by the network device to the terminal device.

Optionally, the downlink information includes radio resource control information and/or downlink control information.

Optionally, the radio resource control information includes at least one of the following: SRS resources in an SRS configuration, a PUSCH configuration, a configured grant configuration, and first indication information.

Optionally, the downlink control information includes at least one of the following: a precoding information and number of layers field (Precoding information and number of layers field), an SRS resource indicator field (SRS resource indicator), second indication information.

Optionally, performing, by the terminal device, the uplink transmission based on the at least three antenna ports according to the downlink information includes:
selecting or determining, by the terminal device, a codebook for at least three antenna ports based on the downlink information;
selecting or determining, by the terminal device, a precoding matrix from the codebook for at least three antenna ports, for PUSCH transmission.

Optionally, the number of antenna ports is three, and correspondingly, a codebook for three antenna ports includes: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the first matrix is obtained by selecting any one column from a 3×3 identity matrix.

Optionally, the second matrix is formed by selecting any two columns from a 3×3 identity matrix in an order of columns in the matrix, and arranging the two columns in their original order or swapped order.

Optionally, the second matrix is formed by selecting any two columns from a 3×3 identity matrix in an order of columns in the matrix, multiplying the selected second column by a first phase factor, and then arranging the two columns in their original order.

Optionally, the third matrix is a 3×3 identity matrix.

Optionally, the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped.

Optionally, the third matrix is formed by selecting three columns from a 3×3 identity matrix in an order of columns in the matrix, multiplying the second column by a first phase factor, multiplying the third column by a second phase factor, and then arranging the three columns in their original order.

Optionally, the method further includes at least one of the following:
in the first matrix, one element is a first value, and the remaining elements are a second value;
in the second matrix and/or the third matrix, one element in each column is a first value, and the remaining elements are a second value;
in the second matrix, one element in the first column is a first value, and the remaining elements are a second value; one element in the second column is the first phase factor, and the remaining elements are the second value;
in the third matrix, one element in the first column is a first value, and the remaining elements are a second value; one element in the second column is the first phase factor, and the remaining elements are the second value; one element in the third column is the second phase factor, and the remaining elements are the second value.

Optionally, the first value is 1, and the second value is 0.

Optionally, the first phase factor is at least one of 1, -1*, j,* and *-j,* and the second phase factor is at least one of 1, -1, *j*, and -*j*, where *j* is an imaginary unit.

Optionally, the first scaling factor is $\frac{1}{\sqrt{3}}$ or 1.

Optionally, the second scaling factor is at least one of the following: $\frac{1}{\sqrt{3}} , \frac{1}{\sqrt{2}}$ and $\frac{1}{\sqrt{6}}$

Optionally, the third scaling factor is $\frac{1}{\sqrt{3}}$ or $\frac{1}{3}$.

Taking three antenna ports as an example, the overall processing flow involved in this embodiment may include the following steps.

Step 1: designing or constructing a codebook for three antenna ports, and saving the codebook for three antenna ports in the terminal device and/or the network device.

Step 2: the terminal device reports a terminal device capability value to the network device, to indicate that the current terminal device supports three antenna ports.

Step 3: the terminal device receives downlink information sent by the network device, the downlink information including radio resource control information and/or downlink control information.

Step 4: the terminal device sends an SRS based on SRS resources and/or the downlink information.

Step 5: the network device performs uplink channel estimation based on the received SRS and sends the downlink control information. Optionally, the downlink control information includes a precoding information and number of layers field, and an SRS resource indicator field.

Optionally, the precoding information and number of layers field is used to indicate a TPMI and the number of layers, while the SRS resource indicator field is used to indicate an SRS resource.

Step 6: the terminal device selects a precoding matrix from the codebook for three antenna ports based on the TPMI to perform precoding processing on a PUSCH, and performs transmission.

It should be noted that the steps contained in the above process may be deleted or added according to an actual situation; and optionally, the order of the steps may be adjusted according to the actual situation, which will not be specifically limited in this embodiment.

Optionally, selecting or determining, by the terminal device, the codebook for three antenna ports based on the downlink information includes at least one of the following:
determining a codebook based on the number of selected or determined SRS ports of the SRS resource;
selecting or determining a codebook for three antenna ports based on the first indication information and/or the second indication information.

Optionally, selecting, by the terminal device, the precoding matrix from the codebook for three antenna ports for PUSCH transmission includes at least one of the following:
determining the TPMI and the number of layers of the precoding matrix based on the precoding information and number of layers field;
performing PUSCH transmission using the same antenna ports as selected or determined SRS ports of the SRS resource;
performing PUSCH transmission using the same antenna ports as SRS ports of the SRS resource, based on third indication information.

Optionally, the SRS resource is indicated by the SRS resource indicator field.

Optionally, the third indication information includes a number SRS port for three antenna ports parameter.

Optionally, selecting or determining, by the terminal device, the SRS ports of the SRS resource includes at least one of the following:
selecting or determining the first three SRS ports of the SRS resource;
selecting or determining, by the terminal device, three SRS ports of the SRS resource;
selecting or determining SRS ports of the SRS resource based on the first indication information and/or the second indication information.

Optionally, the first indication information and/or the second indication information indicates to the terminal device to select or determine three SRS ports from the SRS resource, for SRS transmission.

Optionally, the first indication information includes an SRS port indication parameter.

Optionally, the second indication information includes an SRS port indicator field.

Optionally, the first indication information includes a selected SRS port number parameter.

Optionally, the second indication information includes a selected SRS port number field.

Optionally, the first indication information includes a three SRS ports of the SRS resource enabling parameter.

Optionally, the second indication information includes a three SRS ports of the SRS resource enabling field.

Optionally, the first indication information includes a codebook type parameter.

Optionally, the second indication information includes a codebook type field.

Optionally, the method further includes at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is the same as the number of the selected or determined SRS ports of the SRS resource;
the number of the selected or determined SRS ports of the SRS resource is 3;
the selected or determined SRS ports of the SRS resource are 1000, 1001, and 1002 sequentially;
the selected or determined SRS ports of the SRS resource are 1000, 1001 and 1002 in increasing order of initial antenna port numbers.

Optionally, the method further includes at least one of the following:
adding the SRS port indication parameter in the PUSCH configuration;
adding the SRS port indication parameter in the SRS resource;
adding the SRS port indicator field in the downlink control information;
adding the selected SRS port number parameter in the PUSCH configuration;
adding the selected SRS port number parameter in the SRS resource;
adding the selected SRS port number field in the downlink control information;
adding the three SRS ports of the SRS resource enabling parameter in the PUSCH configuration;
adding the three SRS ports of the SRS resource enabling parameter in the SRS resource;
adding the three SRS ports of the SRS resource enabling field in the downlink control information;
adding the codebook type parameter in the PUSCH configuration;
adding the codebook type parameter in the configured grant configuration;
adding the codebook type field in the downlink control information.

By means of the technical solution in this embodiment, the terminal device sends the downlink information, and the terminal device performs uplink transmission based on at least three antenna ports according to the downlink information, to support the uplink transmission based on the at least three antenna ports, thereby increasing the uplink throughput, improving the uplink coverage and/or reducing the terminal device costs.

### Eighth embodiment

Referring to FIG. 11, FIG. 11 is a first schematic structural diagram of a processing apparatus provided by an embodiment of the present application. The apparatus may be mounted on or may itself be a terminal device (e.g., a mobile phone) in the aforementioned method embodiments. As shown in FIG. 11, the apparatus 160 includes:
a transmission module 1601, configured to perform uplink transmission based on at least three antenna ports according to downlink information.

Optionally, this apparatus further includes:
selecting or determining a codebook for at least three antenna ports based on the downlink information;
selecting or determining a precoding matrix from the codebook for at least three antenna ports, for PUSCH transmission.

Optionally, the method further includes at least one of the following:
the downlink information includes radio resource control information and/or downlink control information;
the number of antenna ports is three;
a codebook for three antenna ports includes: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the apparatus further includes at least one of the following:
the first matrix is obtained by selecting any one column from a 3×3 identity matrix;
the second matrix is formed by selecting any two columns from a 3×3 identity matrix in an order of columns in the matrix, and arranging the two columns in their original order or swapped order;
the second matrix is formed by selecting any two columns from a 3×3 identity matrix in an order of columns in the matrix, multiplying a selected second column by a first phase factor, and then arranging the two columns in their original order;
the third matrix is a 3×3 identity matrix;
the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped;
the third matrix is formed by selecting three columns from a 3×3 identity matrix in an order of columns in the matrix, multiplying a second column by a first phase factor, multiplying a third column by a second phase factor, and then arranging the three columns in their original order;
the radio resource control information includes at least one of the following: SRS resources in an SRS configuration, a PUSCH configuration, a configured grant configuration, and first indication information;
the downlink control information includes at least one of the following: a precoding information and number of layers field, an SRS resource indicator field, second indication information.

Optionally, the apparatus further includes at least one of the following:
in the first matrix, one element is a first value, and the remaining elements are a second value;
in the second matrix and/or the third matrix, one element in each column is a first value, and the remaining elements are a second value;
in the second matrix, one element in the first column is a first value, and the remaining elements are a second value; one element in the second column is the first phase factor, and the remaining elements are the second value;
in the third matrix, one element in the first column is a first value, and the remaining elements are a second value; one element in the second column is a first phase factor, and the remaining elements are the second value; one element in the third column is the second phase factor, and the remaining elements are the second value;
the first scaling factor is $\frac{1}{\sqrt{3}}$ or 1;
the second scaling factor is at least one of the following: $\frac{1}{\sqrt{3}} , \frac{1}{\sqrt{2}}$ and $\frac{1}{\sqrt{6}}$;
the third scaling factor is $\frac{1}{\sqrt{3}}$ or $\frac{1}{3}$;
a TPMI and the number of layers of the precoding matrix are determined based on the precoding information and number of layers field;
PUSCH transmission is performed using the same antenna ports as selected or determined SRS ports of an SRS resource;
PUSCH transmission is performed using the same antenna ports as SRS ports of an SRS resource, based on third indication information;
selecting or determining the codebook for three antenna ports based on the downlink information includes at least one of the following:
   determining a codebook based on the number of selected or determined SRS ports of the SRS resource;
   selecting or determining a codebook for three antenna ports based on the first indication information and/or the second indication information.

Optionally, the apparatus further includes at least one of the following:
the SRS resource is indicated by the SRS resource indicator field;
selecting or determining the SRS ports of the SRS resource includes at least one of the following:
   selecting or determining the first three SRS ports of the SRS resource;
   selecting or determining, by the terminal device, three SRS ports of the SRS resource;
   selecting or determining SRS ports of the SRS resource based on the first indication information and/or the second indication information.

Optionally, the apparatus further includes at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is the same as the number of the selected or determined SRS ports of the SRS resource;
the number of the selected or determined SRS ports of the SRS resource is 3;
the selected or determined SRS ports of the SRS resource are 1000, 1001, and 1002 sequentially;
the selected or determined SRS ports of the SRS resource are 1000, 1001 and 1002 in increasing order of initial antenna port numbers;
the first indication information and/or the second indication information indicates to the terminal device to select or determine three SRS ports of the SRS resource, for SRS transmission;
the first indication information includes an SRS port indication parameter;
the second indication information includes an SRS port indicator field;
the first indication information includes a selected SRS port number parameter;
the second indication information includes a selected SRS port number field;
the first indication information includes a three SRS ports of the SRS resource enabling parameter;
the second indication information includes a three SRS ports of the SRS resource enabling field;
the first indication information includes a codebook type parameter;
the second indication information includes a codebook type field;
the third indication information includes a number SRS port for three antenna ports parameter.

Optionally, the apparatus further includes at least one of the following:
adding the SRS port indication parameter in the PUSCH configuration;
adding the SRS port indication parameter in the SRS resource;
adding the SRS port indicator field in the downlink control information;
adding the selected SRS port number parameter in the PUSCH configuration;
adding the selected SRS port number parameter in the SRS resource;
adding the selected SRS port number field in the downlink control information;
adding the three SRS ports of the SRS resource enabling parameter in the PUSCH configuration;
adding the three SRS ports of the SRS resource enabling parameter in the SRS resource;
adding the three SRS ports of the SRS resource enabling field in the downlink control information;
adding the codebook type parameter in the PUSCH configuration;
adding the codebook type parameter in the configured grant configuration;
adding the codebook type field in the downlink control information.

The processing apparatus provided by the embodiment of the present application is capable of performing the technical solutions shown in the above corresponding method embodiments, and is implemented similarly in terms of principles and beneficial effects, which will not be repeated herein.

### Ninth embodiment

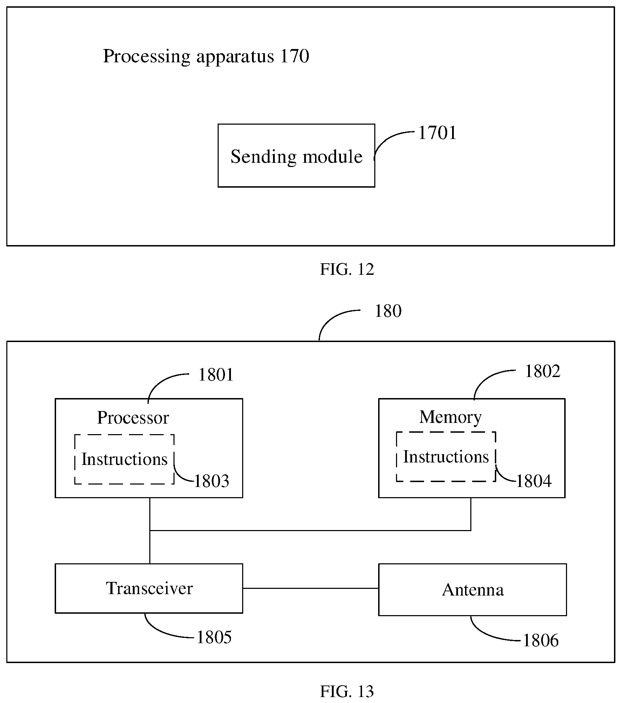

Referring to FIG. 12, FIG. 12 is a second schematic structural diagram of a processing apparatus provided by an embodiment of the present application. The apparatus may be mounted on or may itself be a network device (e.g., at least one of a base station, a transmission and reception point, and a satellite) in the aforementioned method embodiments. As shown in FIG. 12, the apparatus 170 includes:
a sending module 1701, configured to send downlink information, such that a terminal device performs uplink transmission based on at least three antenna ports according to the downlink information.

Optionally, performing, by the terminal device, the uplink transmission based on the at least three antenna ports according to the downlink information includes:
selecting or determining, by the terminal device, a codebook for at least three antenna ports based on the downlink information;
selecting or determining, by the terminal device, a precoding matrix from the codebook for at least three antenna ports, for PUSCH transmission.

Optionally, the method further includes at least one of the following:
the downlink information includes radio resource control information and/or downlink control information;
the number of antenna ports is three;
a codebook for three antenna ports include: a precoding matrix for single-layer transmission, a precoding matrix for two-layer transmission, and a precoding matrix for three-layer transmission.

Optionally, the precoding matrix for single-layer transmission is obtained by multiplying a first matrix by a first scaling factor.

Optionally, the precoding matrix for two-layer transmission is obtained by multiplying a second matrix by a second scaling factor.

Optionally, the precoding matrix for three-layer transmission is obtained by multiplying a third matrix by a third scaling factor.

Optionally, the apparatus further includes at least one of the following:
the first matrix is obtained by selecting any one column from a 3×3 identity matrix;
the second matrix is formed by selecting any two columns from a 3×3 identity matrix in an order of columns in the matrix, and arranging the two columns in their original order or swapped order;
the second matrix is formed by selecting any two columns from a 3×3 identity matrix in an order of columns in the matrix, multiplying a selected second column by a first phase factor, and then arranging the two columns in their original order;
the third matrix is a 3×3 identity matrix;
the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped;
the third matrix is formed by selecting three columns from a 3×3 identity matrix in an order of columns in the matrix, multiplying a second column by a first phase factor, multiplying a third column by a second phase factor, and then arranging the three columns in their original order;
the radio resource control information includes at least one of the following: SRS resources in an SRS configuration, a PUSCH configuration, a configured grant configuration, and first indication information;
the downlink control information includes at least one of the following: a precoding information and number of layers field, an SRS resource indicator field, and second indication information.

Optionally, the apparatus further includes at least one of the following:
in the first matrix, one element is a first value, and the remaining elements are a second value;
in the second matrix and/or the third matrix, one element in each column is a first value, and the remaining elements are a second value;
in the second matrix, one element in the first column is a first value, and the remaining elements are a second value; one element in the second column is the first phase factor, and the remaining elements are the second value;
in the third matrix, one element in the first column is a first value, and the remaining elements are a second value; one element in the second column is the first phase factor, and the remaining elements are the second value; one element in the third column is the second phase factor, and the remaining elements are the second value;
the first scaling factor is $\frac{1}{\sqrt{3}}$ or 1;
the second scaling factor is at least one of the following: $\frac{1}{\sqrt{3}} , \frac{1}{\sqrt{2}}$ and $\frac{1}{\sqrt{6}}$;
the third scaling factor is $\frac{1}{\sqrt{3}}$ or $\frac{1}{3}$;
the terminal device determines a TPMI and the number of layers of the precoding matrix based on the precoding information and number of layers field;
the terminal device performs PUSCH transmission using the same antenna ports as selected or determined SRS ports of an SRS resource;
the terminal device performs PUSCH transmission using the same antenna ports as SRS ports of an SRS resource, based on third indication information;
selecting or determining, by the terminal device, the codebook for three antenna ports based on the downlink information includes at least one of the following:
   determining a codebook based on the number of selected or determined SRS ports of an SRS resource;
   selecting or determining a codebook for three antenna ports based on the first indication information and/or the second indication information.

Optionally, the apparatus further includes at least one of the following:
the SRS resource is indicated by the SRS resource indicator field;
selecting or determining, by the terminal device, the SRS ports of the SRS resource includes at least one of the following:
   selecting or determining, by the terminal device, the first three SRS ports of the SRS resource;
   selecting or determining, by the terminal device, three SRS ports of the SRS resource;
   selecting or determining, by the terminal device, SRS ports of the SRS resource based on the first indication information and/or the second indication information.

Optionally, the apparatus further includes at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is the same as the number of the selected or determined SRS ports of the SRS resource;
the number of the SRS ports of the SRS resource that are selected or determined by the terminal device is 3;
the SRS ports of the SRS resource that are selected or determined by the terminal device are 1000, 1001 and 1002 sequentially;
the SRS ports of the SRS resource that are selected or determined by the terminal device are 1000, 1001 and 1002 in increasing order of initial antenna port numbers;
the first indication information and/or the second indication information indicates to the terminal device to select or determine three SRS ports of the SRS resource, for SRS transmission;
the first indication information includes an SRS port indication parameter;
the second indication information includes an SRS port indicator field;
the first indication information includes a selected SRS port number parameter;
the second indication information includes a selected SRS port number field;
the first indication information includes a three SRS ports of the SRS resource enabling parameter;
the second indication information includes a three SRS ports of the SRS resource enabling field;
the first indication information includes a codebook type parameter;
the second indication information includes a codebook type field;
the third indication information includes a number SRS port for three antenna ports parameter.

Optionally, the apparatus further includes at least one of the following:
adding the SRS port indication parameter in the PUSCH configuration;
adding the SRS port indication parameter in the SRS resource;
adding the SRS port indicator field in the downlink control information;
adding the selected SRS port number parameter in the PUSCH configuration;
adding the selected SRS port number parameter in the SRS resource;
adding the selected SRS port number field in the downlink control information;
adding the three SRS ports of the SRS resource enabling parameter in the PUSCH configuration;
adding the three SRS ports of the SRS resource enabling parameter in the SRS resource;
adding the three SRS ports of the SRS resource enabling field in the downlink control information;
adding the codebook type parameter in the PUSCH configuration;
adding the codebook type parameter in the configured grant configuration;
adding the codebook type field in the downlink control information.

The processing apparatus provided by the embodiment of the present application is capable of performing the technical solutions shown in the above corresponding method embodiments, and is implemented similarly in terms of principles and beneficial effects, which will not be repeated herein.

Referring to FIG. 13, FIG. 13 is a schematic structural diagram of a communication device provided by an embodiment of the present application. As shown in FIG. 13, the communication device 180 described in this embodiment may be the terminal device (or a component that may be used for the terminal device) or the network device (or a component that may be used for the network device) mentioned in the previous method embodiments. The communication device 180 may be configured to implement the method corresponding to the network device or the network device in the above method embodiments, and details may be found in the description in the above method embodiments.

The communication device 180 may include one or more processors 1801, which may also be referred to as processing units and capable of implementing certain control or processing functions. The processor 1801 may be a general-purpose processor or a special-purpose processor, etc. For example, the processor may be a baseband processor, or a central processing unit. The baseband processor may be configured to process a communication protocol and communication data. The central processing unit may be configured to control the communication device to execute a software program and process software program data.

Optionally, the processor 1801 may also store instructions 1803 or data (e.g., intermediate data). Optionally, the instructions 1803 may be run by the processor 1801, such that the communication device 180 performs the method corresponding to the terminal device or the network device in the above method embodiments.

Optionally, the communication device 180 may include a circuit that may implement a sending or receiving or communicating function in the above method embodiments.

Optionally, the communication device 180 may include one or more memories 1802 having instructions 1404 stored thereon. The instructions may be run by the processor 1801, such that the communication device 180 performs the method in the above method embodiments.

Optionally, data may also be stored in the memory 1802. The processor 1801 and the memory 1802 may be arranged separately or integrated together.

Optionally, the communication device 180 may further include a transceiver 1805 and/or an antenna 1806. The processor 1801, which may be referred to as a processing unit, controls the communication device 180 (a terminal device, a core network device, or a radio access network device). The transceiver 1805 may be referred to as a transceiving unit, a transceiving machine, a transceiving circuit, a transceiver, etc., which are configured to implement a transceiving function of the communication device 180.

Optionally, when the communication device 180 is configured to implement operations corresponding to the terminal device in the above embodiments, for example, the transceiver 1805 may receive downlink information, and the processor 1801 may select or determine a codebook for at least three antenna ports based on the downlink information.

Optionally, the specific implementation process of the processor 1801 and the transceiver 1805 may be found in the relevant descriptions of the above embodiments, and will not be repeated here.

Optionally, if the communication device 180 is configured to implement operations corresponding to the network device in the above embodiments, for example, the transceiver 1805 may send first information.

Optionally, the specific implementation process of the processor 1801 and the transceiver 1805 may be found in the relevant descriptions of the above embodiments, and will not be repeated here.

The processor 1801 and the transceiver 1805 described in the present application may be implemented on an IC (Integrated Circuit, integrated circuit), an analog integrated circuit, an RFIC (Radio Frequency Integrated Circuit, radio frequency integrated circuit), a mixed signal integrated circuit, an ASIC (Application Specific Integrated Circuit, application specific integrated circuit), a PCB (Printed Circuit Board, printed circuit board), an electronic device, etc. The processor 1801 and the transceiver 1805 may also be manufactured using various integrated circuit process technologies, such as CMOS (Complementary Metal Oxide Semiconductor, complementary metal oxide semiconductor), NMOS (N Metal-Oxide-Semiconductor, N metal-oxide-semiconductor), PMOS (Positive channel Metal Oxide Semiconductor, positive channel metal oxide semiconductor), BJT (Bipolar Junction Transistor, bipolar junction transistor), bipolar CMOS (BiCMOS), silicon germanium (SiGe), gallium arsenide (GaAs), etc.

In the present application, the communication device may be a terminal device (e.g., a mobile phone) or a network device (e.g., a base station), and the specific meaning needs to be clarified depending on the context. Additionally, the terminal device may be implemented in various forms. For example, the terminal device described in the present application may include a mobile phone, a tablet computer, a notebook computer, a handheld computer, a personal digital assistant (Personal Digital Assistant, PDA), a portable media player (Portable Media Player, PMP), a navigation device, a wearable device, a smart bracelet, a pedometer and other mobile terminals, as well as a digital TV, a desktop computer and other fixed terminal devices.

Although the communication device described in the above embodiments is described by taking the terminal device or the network device as an example, the scope of the communication device described in the present application is not limited to the above-mentioned terminal device or network device. The structure of the communication device may not be limited by FIG. 13. The communication device may be a stand-alone device or part of a larger device.

An embodiment of the present application further provides a communication system. The communication system includes the terminal device in any of the above embodiments, and the network device in any of the above embodiments.

An embodiment of the present application further provides a communication device. The communication device includes a memory and a processor, where a processing program is stored on the memory, and when the processing program is executed by the processor, the steps in the processing method in any of the above embodiments are implemented.

The communication device in the present application may be a terminal device (e.g., a mobile phone) or a network device (e.g., at least one of a base station, a transmission and reception point, and a satellite), and the specific reference needs to be clarified based on context.

An embodiment of the present application further provides a computer-readable storage medium, having a processing program stored thereon, and when the processing program is executed by a processor, the steps in the processing method in any of the above embodiments are implemented.

The embodiments of the communication device and the computer-readable storage medium provided by the embodiments of the present application may contain all the technical features in any of the above processing method embodiments. The description expansion and explanation content are basically the same as those of the above embodiments of the methods, and will not be repeated here.

An embodiment of the present application further provides a computer program product. The computer program product includes computer program codes which, when being run on a computer, cause the computer to perform the methods in various possible embodiments as described above.

An embodiment of the present application further provides a chip. The chip includes a memory and a processor, where the memory is configured to store a computer program, and the processor is configured to call the computer program from the memory and run the computer program, such that a device mounted with the chip performs the methods in various possible embodiments as described above.

It may be understood that the above scenarios are only examples and do not constitute any limitation on the application scenarios of the technical solutions provided by the embodiments of the present application, and the technical solutions of the present application may also be applied to other scenarios. For example, a person of ordinary skill in the art may know that with the evolution of the system architecture and the emergence of new business scenarios, the technical solutions provided by the embodiments of the present application are also applicable to similar technical problems.

The series numbers of the embodiments of the present application are for description only and do not represent the advantages and disadvantages of the embodiments.

The steps in the methods of the embodiments of the present application may be adjusted, merged and deleted according to actual needs.

The units in the devices of the embodiments of the present application may be merged, divided, and deleted according to actual needs.

In the present application, the same or similar term concepts, technical solutions and/or application scenario descriptions are generally described in detail only when they appear for the first time, and when they appear again later, they are generally not repeated for brevity. When understanding the technical solutions and other contents of the present application, the same or similar term concepts, technical solutions and/or application scenario descriptions that are not described in detail later may be found in their previous detailed descriptions.

In the present application, the description of each embodiment has its own focus, so portions not detailed in one embodiment can be found in related descriptions of other embodiments.

Technical features in the technical solutions of the present application may be randomly combined. To make description concise, not all possible combinations of the technical features in the foregoing embodiments are described. However, the combinations of these technical features shall be considered as falling within the scope recorded by the present application provided that no conflict exists.

Through the above description to the implementations, it can be clearly understood by a person skilled in the art that, the methods according to the above embodiments may be implemented by software and a necessary universal hardware platform, and of course may also be implemented by hardware, but in many cases the former is a better implementation. Based on such understanding, the technical solutions of the present application essentially or the part thereof contributing to the prior art may be embodied in the form of a software product. The computer software product is stored in a storage medium (e.g., ROM/RAM, diskette, or compact disk), and includes several instructions to cause a terminal device (which may be a mobile phone, a computer, a server, a controlled terminal device or a network device, etc.) to perform the method according to each of the embodiments of the present application.

The above embodiments may be entirely or partially implemented by software, hardware, firmware or any combination thereof, and may be entirely or partially implemented in the form of a computer program product while being implemented by software. The computer program product includes one or more computer instructions. When the computer program instructions are loaded and executed on the computer, a flow or function described in the embodiments of the present application is generated entirely or partially. The computer may be a general-purpose computer, a special-purpose computer, a computer network, or other programmable apparatuses. The computer instructions may be stored in a storage medium, or transmitted from one storage medium to another storage medium. For example, the computer instructions may be transmitted from a website site, a computer, a server or a data center to another website site, computer, server or data center by means of a wired (e.g., a coaxial cable, an optical fiber, or a digital subscriber line (DSL)) or wireless (e.g., infrared, wireless, or microwave) form. The storage medium may be any available medium that can be accessed by the computer or a data storage device such as a server or a data center, which is integrated with one or more available media. The available medium may be a magnetic medium (e.g., a floppy disk, a memory disk or a magnetic tape), an optical medium (e.g., a DVD), or a semiconductor medium (e.g., a solid state disk (Solid State Disk, SSD)), etc.

The above are only the preferred embodiments of the present application, and are not intended to limit the patent scope of the present application. Any equivalent structure or equivalent process transformation made by using the contents of the description and drawings of the present application, or direct or indirect applications to other related technical fields, are similarly included in the scope of patent protection of the present application.

## Claims

1. A processing method, comprising the following step:
S2: performing uplink transmission based on at least three antenna ports according to downlink information.

2. The method according to claim 1, wherein step S2 comprises:
selecting or determining a codebook for at least three antenna ports based on the downlink information;
selecting or determining a precoding matrix from the codebook for at least three antenna ports, for PUSCH transmissionthe number of antenna ports is three.

3. The method according to claim 2, further comprising at least one of the following:
the downlink information comprises radio resource control information and/or downlink control information;
the number of antenna ports is three;
a codebook for three antenna ports comprises: a precoding matrix for single-layer transmission, a precoding matrix for two-layer transmission, and a precoding matrix for three-layer transmission.

4. The method according to claim 3, further comprising at least one of the following:
the precoding matrix for single-layer transmission is obtained by multiplying a first matrix by a first scaling factor;
the precoding matrix for two-layer transmission is obtained by multiplying a second matrix by a second scaling factor;
the precoding matrix for three-layer transmission is obtained by multiplying a third matrix by a third scaling factor;
the radio resource control information comprises at least one of the following: SRS resources in an SRS configuration, a PUSCH configuration, a configured grant configuration, and first indication information;
the downlink control information comprises at least one of the following: a precoding information and number of layers field, an SRS resource indicator field, second indication information.

5. The method according to claim 4, further comprising at least one of the following:
the first matrix is obtained by selecting any one column from a 3×3 identity matrix;
the second matrix is formed by selecting any two columns from a 3×3 identity matrix in an order of columns in the matrix, and arranging the two columns in their original order or swapped order;
the second matrix is formed by selecting any two columns from a 3×3 identity matrix in an order of columns in the matrix, multiplying a selected second column by a first phase factor, and then arranging the two columns in their original order;
the third matrix is a 3×3 identity matrix;
the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped;
the third matrix is formed by selecting three columns from a 3×3 identity matrix in an order of columns in the matrix, multiplying a second column by a first phase factor, multiplying a third column by a second phase factor, and then arranging the three columns in their original order.

6. The method according to claim 5, further comprising at least one of the following:
in the first matrix, one element is a first value, and remaining elements are a second value;
in the second matrix and/or the third matrix, one element in each column is a first value, and remaining elements are a second value;
in the second matrix, one element in a first column is a first value, and remaining elements are a second value; one element in a second column is the first phase factor, and remaining elements are the second value;
in the third matrix, one element in a first column is a first value, and remaining elements are a second value; one element in a second column is the first phase factor, and remaining elements are the second value; one element in a third column is the second phase factor, and remaining elements are the second value;
determining a TPMI and the number of layers of the precoding matrix based on the precoding information and number of layers field;
performing PUSCH transmission using the same antenna ports as selected or determined SRS ports of an SRS resource;
performing PUSCH transmission using the same antenna ports as SRS ports of an SRS resource, based on third indication information;
selecting or determining the codebook for three antenna ports based on the downlink information comprises at least one of the following:
determining a codebook based on the number of selected or determined SRS ports of an SRS resource;
selecting or determining a codebook for three antenna ports based on the first indication information and/or the second indication information.

7. The method according to claim 6, further comprising at least one of the following:
the first scaling factor is $\frac{1}{\sqrt{3}}$ or 1;
the second scaling factor is at least one of the following: $\frac{1}{\sqrt{3}} , \frac{1}{\sqrt{2}}$ and $\frac{1}{\sqrt{6}}$;
the third scaling factor is $\frac{1}{\sqrt{3}}$ or $\frac{1}{3}$;
the SRS resource is indicated by the SRS resource indicator field;
selecting or determining the SRS ports of the SRS resource comprises at least one of the following:
selecting or determining first three SRS ports of the SRS resource;
selecting or determining three SRS ports of the SRS resource;
selecting or determining SRS ports of the SRS resource based on the first indication information and/or the second indication information.

8. The method according to claim 7, further comprising at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is same as the number of the selected or determined SRS ports of the SRS resource;
the number of the selected or determined SRS ports of the SRS resource is 3;
the selected or determined SRS ports of the SRS resource are 1000, 1001, and 1002 sequentially;
the selected or determined SRS ports of the SRS resource are 1000, 1001 and 1002 in increasing order of initial antenna port numbers;
the first indication information and/or the second indication information indicates to a terminal device to select or determine three SRS ports of the SRS resource, for SRS transmission;
the first indication information comprises an SRS port indication parameter;
the second indication information comprises an SRS port indicator field;
the first indication information comprises a selected SRS port number parameter;
the second indication information comprises a selected SRS port number field;
the first indication information comprises a three SRS ports of the SRS resource enabling parameter;
the second indication information comprises a three SRS ports of the SRS resource enabling field;
the first indication information comprises a codebook type parameter;
the second indication information comprises a codebook type field;
the third indication information comprises a number SRS port for three antenna ports parameter.

9. The method according to claim 7, further comprising at least one of the following:
the SRS port indication parameter is added in the PUSCH configuration;
the SRS port indication parameter is added in the SRS resource;
the SRS port indicator field is added in the downlink control information;
the selected SRS port number parameter is added in the PUSCH configuration;
the selected SRS port number parameter is added in the SRS resource;
the selected SRS port number field is added in the downlink control information;
the three SRS ports of the SRS resource enabling parameter is added in the PUSCH configuration;
the three SRS ports of the SRS resource enabling parameter is added in the SRS resource;
the three SRS ports of the SRS resource enabling field is added in the downlink control information;
the codebook type parameter is added in the PUSCH configuration;
the codebook type parameter is added in the configured grant configuration;
the codebook type field is added in the downlink control information.

10. A processing method, comprising the following step:
S1: sending downlink information, such that a terminal device performs uplink transmission based on at least three antenna ports according to the downlink information.

11. The method according to claim 10, wherein performing, by the terminal device, the uplink transmission based on the at least three antenna ports according to the downlink information comprises:
selecting or determining, by the terminal device, a codebook for at least three antenna ports based on the downlink information;
selecting or determining, by the terminal device, a precoding matrix from the codebook for at least three antenna ports, for PUSCH transmission.

12. The method according to claim 11, further comprising at least one of the following:
the downlink information comprises radio resource control information and/or downlink control information;
the number of antenna ports is three;
a codebook for three antenna ports comprises: a precoding matrix for single-layer transmission, a precoding matrix for two-layer transmission, and a precoding matrix for three-layer transmission.

13. The method according to claim 12, further comprising at least one of the following:
the precoding matrix for single-layer transmission is obtained by multiplying a first matrix by a first scaling factor;
the precoding matrix for two-layer transmission is obtained by multiplying a second matrix by a second scaling factor;
the precoding matrix for three-layer transmission is obtained by multiplying a third matrix by a third scaling factor;
the radio resource control information comprises at least one of the following: SRS resources in an SRS configuration, a PUSCH configuration, a configured grant configuration, and first indication information;
the downlink control information comprises at least one of the following: a precoding information and number of layers field, an SRS resource indicator field, and second indication information.

14. The method according to claim 13, further comprising at least one of the following:
the first matrix is obtained by selecting any one column from a 3×3 identity matrix;
the second matrix is formed by selecting any two columns from a 3×3 identity matrix in an order of columns in the matrix, and arranging the two columns in their original order or swapped order;
the second matrix is formed by selecting any two columns from a 3×3 identity matrix in an order of columns in the matrix, multiplying a selected second column by a first phase factor, and then arranging the two columns in their original order;
the third matrix is a 3×3 identity matrix;
the third matrix is formed by selecting three columns from a 3×3 identity matrix in an order of columns in the matrix, and arranging the three columns in at least one of the following ways: arranging the three columns in their original order, arranging the three columns with any two of the three columns swapped, and arranging the three columns with all of the three columns swapped;
the third matrix is formed by selecting three columns from a 3×3 identity matrix in an order of columns in the matrix, multiplying a second column by a first phase factor, multiplying a third column by a second phase factor, and then arranging the three columns in their original order.

15. The method according to claim 14, further comprising at least one of the following:
in the first matrix, one element is a first value, and remaining elements are a second value;
in the second matrix and/or the third matrix, one element in each column is a first value, and remaining elements are a second value;
in the second matrix, one element in a first column is a first value, and remaining elements are a second value; one element in a second column is the first phase factor, and remaining elements are the second value;
in the third matrix, one element in a first column is a first value, and remaining elements are a second value; one element in a second column is the first phase factor, and remaining elements are the second value; one element in a third column is the second phase factor, and remaining elements are a second value;
the terminal device determines a TPMI and the number of layers of the precoding matrix based on the precoding information and number of layers field;
the terminal device performs PUSCH transmission using the same antenna ports as selected or determined SRS port of an SRS resource;
the terminal device performs PUSCH transmission using the same antenna ports as SRS ports of an SRS resource, based on third indication information;
selecting or determining, by the terminal device, the codebook for three antenna ports based on the downlink information comprises at least one of the following:
determining a codebook based on the number of selected or determined SRS ports of an SRS resource;
selecting or determining a codebook for three antenna ports based on the first indication information and/or the second indication information.

16. The method according to claim 15, further comprising at least one of the following:
the first scaling factor is $\frac{1}{\sqrt{3}}$ or 1;
the second scaling factor is at least one of the following: $\frac{1}{\sqrt{3}} , \frac{1}{\sqrt{2}}$ and $\frac{1}{\sqrt{6}}$;
the third scaling factor is $\frac{1}{\sqrt{3}}$ or $\frac{1}{3}$;
the SRS resource is indicated by the SRS resource indicator field;
selecting or determining, by the terminal device, the SRS ports of the SRS resource comprises at least one of the following:
selecting or determining, by the terminal device, first three SRS ports of the SRS resource;
selecting or determining, by the terminal device, three SRS ports of the SRS resource;
selecting or determining, by the terminal device, SRS ports of the SRS resource based on the first indication information and/or the second indication information.

17. The method according to claim 16, further comprising at least one of the following:
a mapping between the precoding information and number of layers field and the TPMI and the number of layers is determined based on at least one of a maximum rank parameter, a transform precoding parameter and a codebook subset parameter;
the number of antenna ports used in the codebook or the number of antenna ports in the codebook for three antenna ports is same as the number of the selected or determined SRS ports of the SRS resource;
the number of the SRS ports of the SRS resource that are selected or determined by the terminal device is 3;
the SRS ports of the SRS resource that are selected or determined by the terminal device are 1000, 1001 and 1002 sequentially;
the SRS ports of the SRS resource that are selected or determined by the terminal device are 1000, 1001 and 1002 in increasing order of initial antenna port numbers;
the first indication information and/or the second indication information indicates to the terminal device to select or determine three SRS ports of the SRS resource, for SRS transmission;
the first indication information comprises an SRS port indication parameter;
the second indication information comprises an SRS port indicator field;
the first indication information comprises a selected SRS port number parameter;
the second indication information comprises a selected SRS port number field;
the first indication information comprises a three SRS ports of the SRS resource enabling parameter;
the second indication information comprises a three SRS ports of the SRS resource enabling field;
the first indication information comprises a codebook type parameter;
the second indication information comprises a codebook type field;
the third indication information comprises a number SRS port for three antenna ports parameter.

18. The method according to claim 17, further comprising at least one of the following:
adding the SRS port indication parameter in the PUSCH configuration;
adding the SRS port indication parameter in the SRS resource;
adding the SRS port indicator field in the downlink control information;
adding the selected SRS port number parameter in the PUSCH configuration;
adding the selected SRS port number parameter in the SRS resource;
adding the selected SRS port number field in the downlink control information;
adding the three SRS ports of the SRS resource enabling parameter in the PUSCH configuration;
adding the three SRS ports of the SRS resource enabling parameter in the SRS resource;
adding the three SRS ports of the SRS resource enabling field in the downlink control information;
adding the codebook type parameter in the PUSCH configuration;
adding the codebook type parameter in the configured grant configuration;
adding the codebook type field in the downlink control information.

19. A communication device, comprising a memory and a processor, wherein a processing program is stored on the memory, and when the processing program is executed by the processor, the processing method according to claim 1 or 10 is implemented.

20. A computer-readable storage medium, having a computer program stored therein, wherein when the computer program is executed by a processor, the processing method according to claim 1 or 10 is implemented.
